# EUROPEAN PATENT SPECIFICATION

(11) **EP 1 249 047 B1**
(45) Date of publication and mention of the grant of the patent: **25.08.2010**
(21) Application number: 00979141.9
(22) Date of filing: 06.11.2000
(51) Int. Cl.: H01M 4/36

(54) **ELECTRODES INCLUDING PARTICLES OF SPECIFIC SIZES**
ELEKTRODEN, DIE PARTIKEL MIT SPEZIFISCHER GRÖSSE ENTHALTEN
ELECTRODES COMPRENANT DES PARTICULES DE DIMENSION SPECIFIQUE

(30) Priority: 08.11.1999 US 435748
(43) Date of publication of application: 16.10.2002
(73) Proprietor: NanoGram Corporation, Fremont, CA 94538 (US)
(72) Inventor: BUCKLEY, James, P., San Jose, CA 95139 (US); GHANTOUS, Dania, I., San Jose, CA 95122 (US); HOANG, Khanh, San Jose, CA 95122 (US); HORNE, Craig, R., San Francisco, CA 94110 (US); BI, Xiangxin, San Ramon, CA 94583 (US)
(74) Representative: Wakerley, Helen Rachael
(86) International application number: PCT/US2000/030543
(87) International publication number: WO 2001/035473

(56) References cited:
- EP-A- 0 814 525
- EP-A- 0 855 752
- WO-A-99/04441
- US-A- 5 482 797
- US-A- 5 536 591
- US-A- 5 641 591
- US-A- 5 686 203
- US-A- 5 914 094
- US-A- 5 952 125
- US-A- 5 962 156

## Description

### BACKGROUND OF THE INVENTION

The invention relates to improved battery electrode structures, corresponding batteries and method for producing the electrodes. In particular, the improved electrode structures incorporate nanoparticles.

The microminiaturization of electronic components has created widespread growth in the use of portable electronic devices such as cellular phones, pagers, video cameras, facsimile machines, portable stereophonic equipment, personal organizers and personal computers. The growing use of portable electronic equipment has created ever increasing demand for improved power sources for these devices. Relevant batteries include primary batteries, i.e., batteries designed for use through a single charging cycle, and secondary batteries, i.e., batteries designed to be rechargeable. Some batteries designed essentially as primary batteries may be rechargeable to some extent.

Batteries based on lithium have been the subject of considerable development effort and are being sold commercially. Lithium based batteries have become commercially successful due to their relatively high energy density. Lithium based batteries generally use electrolytes containing lithium ions. The negative electrodes for these batteries can include lithium metal or alloy (lithium batteries), or compositions that intercalate lithium (lithium ion batteries). Suitable positive electrode materials for lithium based batteries include materials that can intercalate lithium atoms into their lattice.

In order to produce improved batteries, various materials have been examined for use as cathode (positive electrode) active materials for lithium based batteries. A variety of materials, generally chalcogenides or nitrides, are useful in lithium based batteries. A variety of other electroactive materials have been found to be suitable for use in the negative electrode. The selection of materials for use in the positive electrode and negative electrode determines the cell voltage.

EPO 855752 provides a method of depositing metal particles on a current collecting wire for use as an anode. A paste process produces electrodes of 50 µm thickness.

### SUMMARY OF THE INVENTION

In a first aspect, the invention pertains to an electrode comprising a collection of particles having an average diameter less than 500 nm and a polymer binder, the electrode having a root mean square surface roughness less than 1 µm and an average thickness less than 5 µm. The collection of particles comprises electroactive particles.

Further aspects of the invention are set out in the accompanying claims.

The particle average molecular weight may be greater than about one million amu.

The electrode may comprise the electroactive particles and exfoliated graphite.

Furthermore, the invention pertains to a battery comprising:
a positive electrode according to the first aspect of the invention;
a negative electrode; and
a separator between the positive electrode and the negative electrode.

A battery structure may comprise an electrode according to the invention and a separator, wherein the electrode and separator comprise a polymer that forms a continuous matrix between the electrode and the separator.

A circuit may comprise a monolithic structure comprising an integrated circuit and a battery wherein the current collectors of the battery are integrated with the integrated circuit, and wherein an electrode of the battery comprises an electrode according to the first aspect of the invention.

A method for producing an electrode and separator structure may comprise establishing a steep gradient of electroactive particles within a polymer wherein the portion of the polymer with a significant concentration of electroactive particles forms the electrode and the portion of the polymer substantially devoid of electroactive particles comprises the separator.

### BRIEF DESCRIPTION OF THE DRAWINGS

Fig. 1 is a schematic, sectional view of an embodiment of a laser pyrolysis apparatus taken through the middle of the laser radiation path. The lower inserts are bottom views of the injection nozzle with one or two reactant inlets, and the upper insert is a bottom view of the collection nozzle.
Fig. 2 is a schematic view of a reactant delivery apparatus for the delivery of vapor reactants to the laser pyrolysis apparatus of Fig. 1.
Fig. 3 is a schematic sectional view of a solid precursor delivery system taken through the center of the system.
Fig. 4 is schematic, side view of a reactant delivery apparatus for the delivery of an aerosol reactant to the laser pyrolysis apparatus of Fig. 1.
Fig. 5 is schematic, side view of an alternative embodiment of a reactant delivery apparatus for the delivery of an aerosol reactant to the laser pyrolysis apparatus of Fig. 1.
Fig. 6 is a schematic, perspective view of a reaction chamber of an alternative embodiment of the laser pyrolysis apparatus, where the materials of the chamber are depicted as transparent to reveal the interior of the apparatus.
Fig. 7 is a perspective view of an embodiment of a laser pyrolysis apparatus with an elongated reaction chamber.
Fig. 8 is a sectional view of the laser pyrolysis apparatus of Fig. 7, where the section is taken along line 8-8 of Fig. 7.
Fig. 9 is a schematic, sectional view of an apparatus for heat treating nanoparticles, in which the section is taken through the center of the apparatus.
Fig. 10 is a schematic, perspective view of an embodiment of a battery of the invention.
Fig. 11 is a schematic, cut away cross section of a cylindrical battery embodiment incorporating improved battery features.
Fig. 12 is a fragmentary cross section of the cylindrical battery of Fig. 11 taken along line 12-12 of Fig. 11.
Fig. 13 is a schematic sectional view of four thin batteries stacked in parallel.
Fig. 14 is a top view of an integrated battery integrated with microelectronic components.
Fig. 15 is a sectional view of the integrated battery of Fig. 14 taken along line 15-15 of Fig. 14.
Fig. 16 is a top view of an alternative embodiment of an integrated battery.
Fig. 17 is a plot of the particle size distribution for lithium manganese oxide nanoparticles used in the Example.
Fig. 18 is a scanning electron micrograph showing the smooth electrode surface produced when incorporating lithium manganese oxide nanoparticles into the electrode.
Fig. 19 is a scanning electron micrograph of the material shown in Fig. 18 magnified a factor of 100.
Fig. 20 is a scanning electron micrograph of an electrode surface produced under the same conditions as the electrode in Fig. 18 except that commercially available lithium manganese oxide was used.

### DETAILED DESCRIPTION OF THE ILLUSTRATIVE EMBODIMENTS

The use of electroactive nanoparticles in a battery electrode yields a flexibility for the production of a variety of useful structures that could not be prepared using other materials. In particular, electrodes produced with nanoparticles can have higher particle densities. In addition, the use of nanoparticles provides for the formation of very smooth electrodes and very thin battery structures that have low resistance and high current fluxes. The thin structures are extremely versatile with respect to the formation of complete cells that are small and/or have very high power densities. In addition, the use of nanoscale particles can be used to form batteries that are part of a complete integrated structure.

Batteries include at least one negative electrode and at least one positive electrode with a separator between the negative electrode and the positive electrode. The positive electrode acts as a cathode during discharge of the battery, and the negative electrode acts as an anode during discharge of the battery. The separator is electrically insulating to prevent short circuiting of the battery, but the separator conducts ions of the electrolyte to maintain overall electrical neutrality during current flow associated with discharging or charging of the battery. Batteries of interest include primary batteries, which are not rechargeable, and secondary batteries, which are rechargeable.

Appropriate electroactive nanoparticles can be incorporated into the positive electrode and/or the negative electrode of the battery. Preferred collections of electroactive nanoparticles for forming battery components have an average diameter less than 500 nm and a very narrow distribution of primary particle diameters. Preferably, both the positive electrode and the negative electrode include nanoparticles with different respective compositions, such that the overall battery structure can incorporate the improvements resulting from the use of nanoparticles in each of the electrodes. In addition, the use of nanoparticles in the electrodes allows for the production of improved battery structures described herein.

Laser pyrolysis is an excellent approach for efficiently producing electroactive nanoscale particles with a narrow distribution of average particle diameters. In particular, laser pyrolysis can be used to produce a variety of electroactive particles, such as metal oxides and metal sulfides. A basic feature of successful application of laser pyrolysis for the production of desirable ceramic nanoparticles is the generation of a reactant stream containing a metal precursor compound, a radiation absorber and, generally, a secondary reactant. The secondary reactant can be a source of atoms, such as oxygen, required for the desired product or an oxidizing or reducing agent to drive a desired product formation. A secondary reactant is not needed if the precursor decomposes to the desired product under intense light radiation: The reactant stream is pyrolyzed by an intense light beam, generally a laser beam. As the reactant stream leaves the laser beam, the particles are rapidly quenched.

To perform laser pyrolysis, reactants can be supplied in vapor form. Alternatively, one or more reactants can be supplied as an aerosol. The use of an aerosol provides for the use of a wider range of metal precursors for laser pyrolysis than are suitable for vapor delivery only. Thus, less expensive precursors can be used with aerosol delivery. Laser pyrolysis involves the reaction of a reactant stream within a reaction chamber where any solvent present is rapidly vaporized as the reactants flow into the reaction zone. Suitable control of the reaction conditions with gaseous and/or aerosol reactants results in nanoscale particles with a narrow particle size distribution.

A dry powder of nanoparticles is produced by laser pyrolysis. Nanoparticles produced by laser pyrolysis can be subjected to additional processing to alter the nature of the particles, such as the composition and/or the crystallinity. In particular, the nanoparticles can be subjected to heat processing an a gas atmosphere prior to use. Under suitably mild conditions, heat processing is effective to modify the characteristics of the particles without destroying the nanoscale size or the narrow particle size distribution of the initial particles. Higher densities of electroactive nanoparticles can be achieved due to packing of the nanoscale particles.

To form the electrodes, generally the nanoparticles are mixed with a binder to form the electrode. The composition of the binder can be altered to provide for the use of relatively less binder for a particular quantity of electroactive nanoparticles. In particular, higher molecular weight-less crystalline binders are preferred. Unless the electroactive particles are sufficiently electrically conductive, additional electrically conductive particles are included in the electrode. The electrically conductive particles preferably are on a suitable size scale to take full advantage of the nanoscale of the electrically conductive particles. In some embodiments, improved electrodes formed with uniform nanoparticles are integrated with ultrathin metalized polyester, which serves as the current collector.

Very thin and/or very smooth electrodes can be formed from a dispersion of nanoparticles in a volatile solvent. The dispersion can be applied to a substrate, for example, by spin coating, spray coating and electrophoretic coating. Additional battery components can be formed with these coating techniques or with vapor deposition approaches. Generally, the components are applied sequentially.

By using nanoparticles in both of the electrodes extremely small battery structures can be formed. If appropriately formed, the electrodes can be extremely smooth. Due to the smoothness of the electrodes correspondingly thinner separators can be used. To form these small structures, appropriately small electrically conductive particles, if needed, are incorporated into the electrodes. In addition, suitable separators should be used for the formation of extremely small structures. In particular, selected embodiments of battery structures have an overall thickness of less than about 5 microns.

Due to the thinness of the improved battery structures, they can be integrated into a electronic circuit. The formation of these integrated battery units are consistent with other approaches for the formation of other integrated circuit components. In addition, using improved processing approaches, elaborate integrated battery structures can be formed having reduced electrical resistance and high current flux through the integrated circuit.

### A. Production of Nanocrvstalline/Nanoscale Electroactive Particles

Laser pyrolysis has been discovered to be a valuable tool for the production of nanoscale electroactive and electrically conductive particles, including, in particular, metal particles, metal oxide particles and metal sulfide particles. Particularly relevant particles are described further below. In addition, the particles produced by laser pyrolysis are a convenient material for further heat processing under mild conditions to expand the pathways for the production of desirable metal oxide particles. Thus, using laser pyrolysis alone or in combination with additional processes, a wide variety of desirable nanoscale particles can be produced.

The reaction conditions determine the qualities of the particles produced by laser pyrolysis. The reaction conditions for laser pyrolysis can be controlled relatively precisely in order to produce particles with desired properties. The appropriate reaction conditions to produce a certain type of particles generally depend on the design of the particular apparatus. Specific conditions used to produce several different electroactive and electrically conductive nanoparticles in particular laser pyrolysis apparatuses are referenced or described below. Furthermore, some general observations on the relationship between reaction conditions and the resulting particles can be made.

Increasing the laser power results in increased reaction temperatures in the reaction region as well as a faster quenching rate. A rapid quenching rate tends to favor production of high energy phases, which may not be obtained with processes near thermal equilibrium. Similarly, increasing the chamber pressure also tends to favor the production of higher energy structures. Also, increasing the concentration of the reactant serving as an oxygen source in the reactant stream favors the production of particles with increased amounts of oxygen.

Reactant flow rate and velocity of the reactant gas stream are inversely related to particle size so that increasing the reactant gas flow rate or velocity tends to result in smaller particle sizes. Also, the growth dynamics of the particles have a significant influence on the size of the resulting particles. In other words, different forms of a product compound have a tendency to form different size particles from other phases under relatively similar conditions. Light intensity/laser power also influences particle size with increased light intensity favoring larger particle formation for lower melting materials and smaller particle formation for higher melting materials.

Laser pyrolysis has been performed generally with gas phase reactants. Appropriate metal precursor compounds for gaseous delivery generally include metal compounds with reasonable vapor pressures, i.e., vapor pressures sufficient to get desired amounts of precursor vapor in the reactant stream. The vessel holding liquid or solid precursor compounds can be heated to increase the vapor pressure of the metal precursor, if desired.

A carrier gas can be bubbled through a liquid precursor to facilitate delivery of a desired amount of precursor vapor. Suitable liquid, metal precursors with sufficient vapor pressure of gaseous delivery can be found in the references cited below. Solid precursors generally are heated to produce a sufficient vapor pressure. A carrier gas can be passed over the solid precursor to facilitate delivery of the precursor vapor. A suitable container for heating and delivering of a solid precursor to a laser pyrolysis apparatus is described below. Suitable solid precursors for the production of desired nanoparticles can be found in the references cited below.

The use of exclusively gas phase reactants is somewhat limiting with respect to the types of precursor compounds that can be used conveniently. Thus, techniques have been developed to introduce aerosols containing reactant precursors into laser pyrolysis chambers. Improved aerosol delivery apparatuses for reaction systems are described further in commonly assigned and copending U.S. Patent Application Serial Number 09/188,670 to Gardner et al., entitled "Reactant Delivery Apparatuses," filed November 9, 1998, incorporated herein by reference.

Using aerosol delivery apparatuses, solid precursor compounds can be delivered by dissolving the compounds in a solvent. Alternatively, powdered precursor compounds can be dispersed in a liquid/solvent for aerosol delivery. Liquid precursor compounds can be delivered as an aerosol from a neat liquid, a multiple liquid dispersion or a liquid solution. Aerosol reactants can be used to obtain a significant reactant throughput. A solvent/dispersant can be selected to achieve desired properties of the resulting solution/dispersion. Suitable solvents include water, methanol, ethanol, isopropyl alcohol, other organic solvents and mixtures thereof. The solvent should have a desired level of purity such that the resulting particles have a desired purity level. Some solvents, such as isopropyl alcohol, are significant absorbers of infrared light from a CO₂ laser such that no additional laser absorbing compound may be needed within the reactant stream if a CO₂ laser is used as a light source.

If aerosol precursors are formed with a solvent present, the solvent preferably is rapidly evaporated by the light beam in the reaction chamber such that a gas phase reaction can take place. Thus, the fundamental features of the laser pyrolysis reaction are unchanged by the presence of an aerosol. Nevertheless, the reaction conditions are affected by the presence of the aerosol. Below, references are provided with conditions for the production of manganese oxide nanoparticles and other nanoparticles using aerosol precursors in a particular laser pyrolysis reaction chamber. Thus, the parameters associated with aerosol reactant delivery can be explored further based on that description.

A number of suitable solid, metal precursor compounds can be delivered as an aerosol from solution. The compounds are dissolved in a solution preferably with a concentration greater than about 0.5 molar. Generally, the greater the concentration of precursor in the solution the greater the throughput of reactant through the reaction chamber. As the concentration increases, however, the solution can become more viscous such that the aerosol may have droplets with larger sizes than desired. Thus, selection of solution concentration can involve a balance of factors in the selection of a preferred solution concentration.

Preferred secondary reactants serving as an oxygen source include, for example, O₂, CO, CO₂, O₃ and mixtures thereof. O₂ can be supplied as air. The secondary reactant compound should not react significantly with the metal precursor prior to entering the reaction zone since this generally would result in the formation of large particles.

Laser pyrolysis can be performed with a variety of optical frequencies. Preferred light sources operate in the infrared portion of the electromagnetic spectrum. CO₂ lasers are particularly preferred sources of light. Infrared absorbers for inclusion in the reactant stream include, for example, C₂H₄, isopropyl alcohol, NH₃, SF₆, SiH₄ and O₃. O₃ can act as both an infrared absorber and as an oxygen source. The radiation absorber, such as the infrared absorber, absorbs energy from the radiation beam and distributes the energy to the other reactants to drive the pyrolysis.

Preferably, the energy absorbed from the light beam increases the temperature at a tremendous rate, many times the rate that heat generally would be produced by exothermic reactions under controlled condition. While the process generally involves nonequilibrium conditions, the temperature can be described approximately based on the energy in the absorbing region. The laser pyrolysis process is qualitatively different from the process in a combustion reactor where an energy source initiates a reaction, but the reaction is driven by energy given off by an exothermic reaction. Thus, while this light driven process is referred to as laser pyrolysis, it is not a thermal process even though traditional pyrolysis is a thermal process.

An inert shielding gas can be used to reduce the amount of reactant and product molecules contacting the reactant chamber components. Inert gases can also be introduced into the reactant stream as a carrier gas and/or as a reaction moderator. Appropriate inert shielding gases include, for example, Ar, He and N₂.

An appropriate laser pyrolysis apparatus generally includes a reaction chamber isolated from the ambient environment. A reactant inlet connected to a reactant delivery apparatus produces a reactant stream through the reaction chamber. A laser beam path intersects the reactant stream at a reaction zone. The reactant/product stream continues after the reaction zone to an outlet, where the reactant/product stream exits the reaction chamber and passes into a collection apparatus. Generally, the light source, such as a laser, is located external to the reaction chamber, and the light beam enters the reaction chamber through an appropriate window.

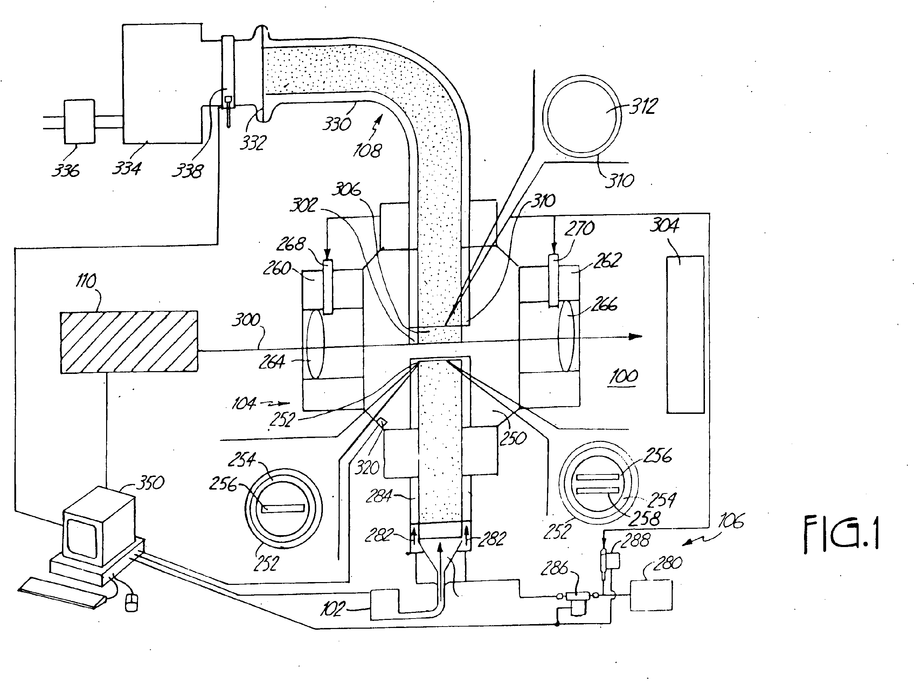

Referring to Fig. 1, a particular embodiment 100 of a laser pyrolysis system involves a reactant delivery apparatus 102, reaction chamber 104, shielding gas delivery apparatus 106, collection apparatus 108 and light source 110. Alternative designs can be used for reaction delivery apparatuses 102 with the apparatus of Fig. 1. A first reaction delivery apparatus described below can be used to deliver exclusively gaseous reactants. Two alternative reactant delivery apparatuses are described for delivery of one or more reactants as an aerosol.

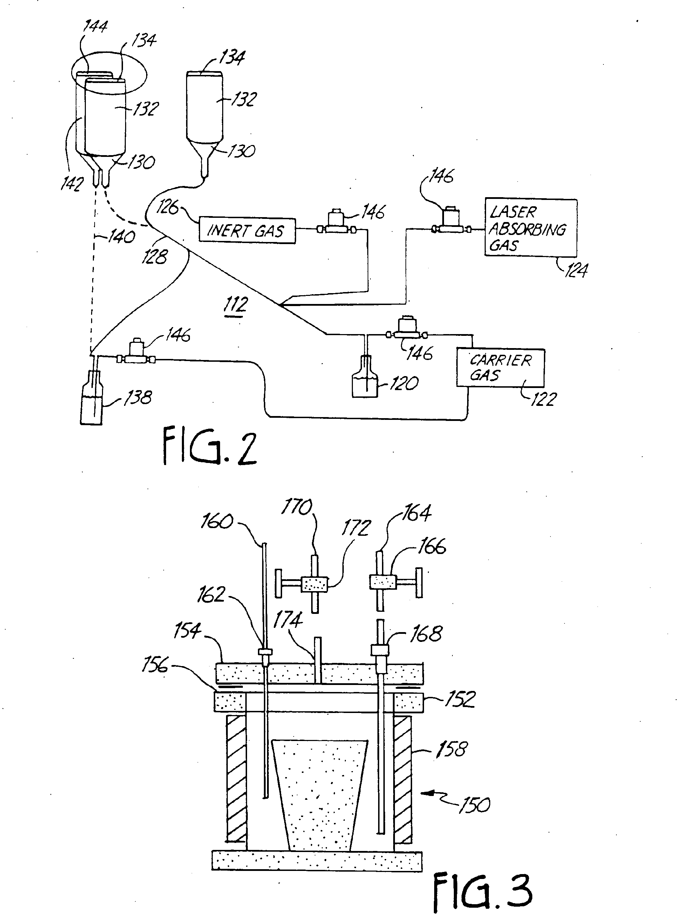

Referring to Fig. 2, a first embodiment 112 of reactant delivery apparatus 102 includes a source 120 of a precursor compound. For liquid or solid reactants, a carrier gas from one or more carrier gas sources 122 can be introduced into precursor source 120 to facilitate delivery of the reactant. Precursor source 120 can be a liquid holding container, a solid precursor delivery apparatus, as described below, or other suitable container. The carrier gas from carrier gas source 122 preferably is either an infrared absorber and/or an inert gas. Carrier gas preferably is bubbled through a liquid reactant compound or delivered into a solid reactant delivery apparatus. The quantity of reactant vapor in the reaction zone is roughly proportional to the flow rate of the carrier gas. A liquid or solid reactant can be heated to increase its vapor pressure. Similarly, portions of reactant delivery apparatus 102 can be heated to inhibit the deposition of reactant compound on the walls of the delivery apparatus.

Alternatively, carrier gas can be supplied directly from infrared absorber source 124 and/or inert gas source 126, as appropriate. The gases from precursor source 120 are mixed with gases from infrared absorber source 124 and/or inert gas source 126 by combining the gases in a single portion of tubing 128. The gases are combined a sufficient distance from reaction chamber 104 such that the gases become well mixed prior to their entrance into reaction chamber 104. The combined gas in tube 128 passes through a duct 130 into channel 132, which is in fluid communication with reactant inlet 134, which can be part of a multiple inlet delivery apparatus, as shown in phantom lines in Fig. 2.

A second reactant can be supplied from second reactant source 138, which can be a liquid reactant delivery apparatus, a solid reactant delivery apparatus, a gas cylinder or other suitable container or containers. If second reactant source 138 delivers a liquid or solid reactant, carrier gas from carrier gas source 122 or an alternative carrier gas source can be used to facilitate delivery of the reactant. As shown in Fig. 2, second reactant source 138 delivers a second reactant to duct 130 by way of tube 128. Alternatively, second reactant source 138 can deliver the second reactant to tube 140 for delivery through duct 142 to a second reactant inlet 144, as depicted with phantom lines in Fig. 2. Inlets 134, 144 can be angled slightly toward each other to facilitate mixing of the gases.

With alternative delivery through reactant inlets 134 and 144, the first and second reactants are mixed within the reaction chamber after exiting from the reactant inlets. This is particularly advantageous if the reactants spontaneously react. If more than two reactants are used, the additional reactants can similarly be delivered through a single reactant inlet 134, through two inlets 134, 144, or through more than two reactant inlets, as appropriate. Mass flow controllers 146 can be used to regulate the flow of gases within the reactant delivery system of Fig. 2.

Referring to Fig. 3, the solid precursor delivery apparatus 150 for vapor delivery includes a container 152 and a lid 154. A gasket 156 is located between container 152 and lid 154. In one preferred embodiment, container 152 and lid 154 are made from stainless steel, and gasket 156 is made from copper. In this embodiment, lid 154 and gasket 156 are bolted to container 152. Other inert materials, such as Pyrex^{®}, suitable for the temperatures and pressures applied to the solid precursor system can be used. Container 152 is surrounded with a band heater 158, which is used to set the temperature of the delivery apparatus 150 at desired values. Suitable band heaters are available from Omega Engineering Inc. Stamford, Conn. The temperature of the band heater can be adjusted to yield a desired vapor pressure of the precursor compound. Additional portions of the precursor delivery system can be heated to maintain the precursor in a vapor state after it has left container 152.

Preferably, a thermocouple 160 is inserted into container 152 through lid 154. Thermocouple 160 can be inserted by way of a Swagelok^{®} fitting 162 or other suitable connection. Tubing 164 provides a input flow of a carrier gas into container 152. Tubing 164 preferably includes a shut off valve 166 and can be inserted through lid 154 by way of a Swagelok^{®} fitting 168 or other suitable connection. Output tube 170 also preferably includes a shut off valve 172. Output tube 170 preferably enters into container 152 through lid 154 at a sealed connection 174. Tubes 164 and 170 can be made of any suitable inert material such as stainless steel. A solid precursor can be placed directly within container 152 or it can be placed within a smaller, open container within container 152.

As noted above, the reactant stream can include one or more aerosols. The aerosols can be formed within reaction chamber 104 or outside of reaction chamber 104 prior to injection into reaction chamber 104. If the aerosols are produced prior to injection into reaction chamber 104, the aerosols can be introduced through reactant inlets comparable to those used for gaseous reactants; such as reactant inlet 134 in Fig. 2.

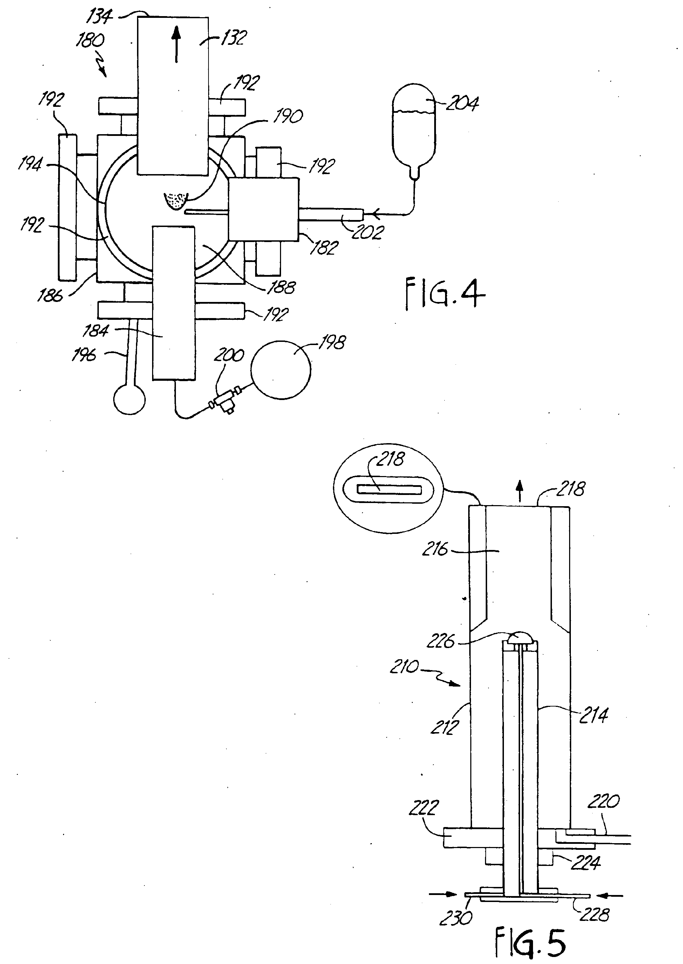

Referring to Fig. 4, an alternative embodiment 180 of the reactant supply system 102 is used to supply an aerosol to channel 132. As described above, channel 132 forms part of an injection nozzle for directing reactants into the reaction chamber and terminates at reactant inlet 134. Reactant supply system 180 includes an aerosol generator 182, carrier gas/vapor supply tube 184 and junction 186. Channel 132, aerosol generator. 182 and supply tube 184 meet within interior volume 188 of junction 186. Supply tube 184 is oriented to direct carrier gas along channel 132. Aerosol generator 182 is mounted such that an aerosol 190 is generated in the interior volume 188 of junction 186 between the opening into channel 134 and the outlet from supply tube 184.

Aerosol generator 182 can operate based on a variety of principles. For example, the aerosol can be produced with an ultrasonic nozzle, with an electrostatic spray system, with a pressure-flow or simplex atomizer, with an effervescent atomizer or with a gas atomizer where liquid is forced under significant pressure through a small orifice and fractured into particles by a colliding gas stream. Suitable ultrasonic nozzles can include piezoelectric transducers. Ultrasonic nozzles with piezoelectric transducers and suitable broadband ultrasonic generators are available from Sono-Tek Corporation, Milton, NY, such as model 8700-120. Suitable aerosol generators are described further in copending and commonly assigned, U.S. Patent Application Serial No. 09/188,670 to Gardner et al., entitled "REACTANT DELIVERY APPARATUSES," incorporated herein by reference. Additional aerosol generators can be attached to junction 186 through other ports 192 such that additional aerosols can be generated in interior volume 188 for delivery into the reaction chamber.

Junction 186 includes ports 192 to provide access from outside junction 186 to interior 188. Thus, channel 132, aerosol generator 182 and supply tube 184 can be mounted appropriately. In one embodiment, junction 186 is cubic with six cylindrical ports 192, with one port 192 extending from each face of junction 186. Junction 186 can be made from stainless steel or other durable, noncorrosive material. A window 194 preferably is sealed at one port 192 to provide for visual observation into interior 188. The port 192 extending from the bottom of junction 186 preferably includes a drain 196, such that condensed aerosol that is not delivered through channel 134 can be removed from junction 186.

Carrier gas/vapor supply tube 184 is connected to gas source 198. Gas source 198 can include one or a plurality of gas containers that are connected to deliver a selected gas or gas mixture to supply tube 184. Carrier gas can be passed through a liquid precursor delivery apparatus or a solid precursor delivery apparatus, such that the carrier gas includes vapor of a liquid precursor or a solid precursor. Thus, carrier gas/vapor supply tube 184 can be used to deliver a variety of desired gases and/or vapors within the reactant stream including, for example, laser absorbing gases, reactants, and/or inert gases. The flow of gas from gas source 198 to supply tube 184 preferably is controlled by one or more mass flow controllers 200 or the like. Liquid supply tube 202 is connected to aerosol generator 182 and to liquid supply 204. For the production of ceramic particles, liquid supply 204 can hold a liquid comprising a metal precursor.

In the embodiment shown in Fig. 4, aerosol generator 182 generates an aerosol with momentum roughly orthogonal to the carrier gas flow from tube 184 to channel 132. Thus, carrier gas/vapor from supply tube 184 directs aerosol precursor generated by aerosol generator 182 into channel 132. In operation, carrier gas flow directs the aerosol delivered within interior volume 188 into channel 132. In this way, the delivery velocity of the aerosol is determined effectively by the flow rate of the carrier gas.

In alternative preferred embodiments, the aerosol generator is placed at an upward angle relative to the horizontal, such that a component of the forward momentum of the aerosol is directed along channel 134. In a preferred embodiment, the output directed from the aerosol generator is placed at about a 45° angle relative to the normal direction defined by the opening into channel 134, i.e. the direction of the flow into channel 134 from supply tube 184.

Referring to Fig. 5, another embodiment 210 of the reactant supply system 102 can be used to supply an aerosol to duct 132. Reactant supply system 210 includes an outer nozzle 212 and an inner nozzle 214. Outer nozzle 212 has an upper channel 216 that leads to a rectangular outlet 218 at the top of outer nozzle 212, as shown in the insert in Fig. 5. Rectangular nozzle has selected dimensions to produce a reactant stream of desired expanse within the reaction chamber. Outer nozzle 212 includes a drain tube 220 in base plate 222. Drain tube 220 is used to remove condensed aerosol from outer nozzle 212. Inner nozzle 214 is secured to outer nozzle 212 at fitting 224.

Inner nozzle 214 can be a gas atomizer, such as a gas atomizer from Spraying Systems (Wheaton, IL), for example, model number 17310-12-1x8jj. This model gas atomizer has about a 0.5 inch diameter and a 12.0 inch length. The top of the nozzle preferably is a twin orifice internal mix atomizer 226 (for example, 0.055 in. gas orifice and 0.005 in. liquid orifice). Liquid is fed to the atomizer through tube 228, and gases for introduction into the reaction chamber are fed to the atomizer through tube 230. Interaction of the gas with the liquid assists with droplet formation.

Outer nozzle 212 and inner nozzle 214 are assembled concentrically. Outer nozzle 212 shapes the aerosol generated by inner nozzle 214 such that it has a flat rectangular cross section. In addition, outer nozzle 212 helps to achieve a uniform aerosol velocity and a uniform aerosol distribution along the cross section. Outer nozzle 212 can be reconfigured for different reaction chambers. The height of outer nozzle 212 relative to the light beam can be adjusted to produce spray characteristics that result in desired particle properties, with a three inch separation between outer nozzle 212 and the light beam being suitable for some embodiments.

The reaction chamber 104 includes a main chamber 250. Reactant supply system 102 connects to the main chamber 250 at injection nozzle 252. Reaction chamber 104 can be heated to a surface temperature above the dew point of the mixture of reactants and inert components at the pressure in the apparatus.

The end of injection nozzle 252 has an annular opening 254 for the passage of inert shielding gas, and a reactant inlet 256 (left lower insert) or inlets 256, 258 (right lower insert) for the passage of reactants to form a reactant stream in the reaction chamber. Reactant inlets 256, 258 preferably are slits, as shown in the lower inserts of Fig. 1. Annular opening 254 has, for example, a diameter of about 1.5 inches and a width along the radial direction from about 1/8 in to about 1/16 in. The flow of shielding gas through annular opening 254 helps to prevent the spread of the reactant gases and product particles throughout reaction chamber 104.

Tubular sections 260, 262 are located on either side of injection nozzle 252. Tubular sections 260, 262 include ZnSe windows 264, 266, respectively. Windows 264, 266 are about 1 inch in diameter. Windows 264, 266 are preferably cylindrical lenses with a focal length equal to the distance between the center of the chamber to the surface of the lens to focus the light beam to a point just below the center of the nozzle opening. Windows 264, 266 preferably have an antireflective coating. Appropriate ZnSe lenses are available from Laser Power Optics, San Diego, California. Tubular sections 260, 262 provide for the displacement of windows 264, 266 away from main chamber 250 such that windows 264, 266 are less likely to be contaminated by reactants and/or products. Window 264, 266 are displaced, for example, about 3 cm from the edge of the main chamber 250.

Windows 264, 266 are sealed with a rubber o-ring to tubular sections 260, 262 to prevent the flow of ambient air into reaction chamber 104. Tubular inlets 268, 270 provide for the flow of shielding gas into tubular sections 260, 262 to reduce the contamination of windows 264, 266. Tubular inlets 268, 270 are connected to shielding gas delivery apparatus 106.

Referring to Fig. 1, shielding gas delivery system 106 includes inert gas source 280 connected to an inert gas duct 282. Inert gas duct 282 flows into annular channel 284 leading to annular opening 254. A mass flow controller 286 regulates the flow of inert gas into inert gas duct 282. If reactant delivery system 112 of Fig. 2 is used, inert gas source 126 can also function as the inert gas source for duct 282, if desired. Referring to Fig. 1, inert gas source 280 or a separate inert gas source can be used to supply inert gas to tubes 268, 270. Flow to tubes 268, 270 preferably is controlled by a mass flow controller 288.

Light source 110 is aligned to generate a light beam 300 that enters window 264 and exits window 266. Windows 264, 266 define a light path through main chamber 250 intersecting the flow of reactants at reaction zone 302. After exiting window 266, light beam 300 strikes power meter 304, which also acts as a beam dump. An appropriate power meter is available from Coherent Inc., Santa Clara, CA. Light source 110 can be a laser or an intense conventional light source such as an arc lamp. Preferably, light source 110 is an infrared laser, especially a CW CO₂ laser such as an 1800 watt maximum power output laser available from PRC Corp., Landing, NJ.

Reactants passing through reactant inlet 256 in injection nozzle 252 initiate a reactant stream. The reactant stream passes through reaction zone 302, where reaction involving the metal precursor compounds takes place. Heating of the gases in reaction zone 302 is extremely rapid, roughly on the order of 10⁵ degree C/sec depending on the specific conditions. The reaction is rapidly quenched upon leaving reaction zone 302, and particles 306 are formed in the reactant/product stream. The nonequilibrium nature of the process allows for the production of nanoparticles with a highly uniform size distribution and structural homogeneity.

The path of the reactant stream continues to collection nozzle 310. In a preferred embodiment, collection nozzle 310 is spaced about 2 cm from injection nozzle 252. The small spacing between injection nozzle 252 and collection nozzle 310 helps reduce the contamination of reaction chamber 104 with reactants and products. Collection nozzle 310 has a circular opening 312, as shown in the upper insert of Fig. 1. Circular opening 312 feeds into collection system 108.

The chamber pressure is monitored with a pressure gauge 320 attached to the main chamber. The preferred chamber pressure for the production of the desired nanoparticles generally ranges from about 80 Torr to about 650 Torr.

Reaction chamber 104 has two additional tubular sections not shown. One of the additional tubular sections projects into the plane of the sectional view in Fig. 1, and the second additional tubular section projects out of the plane of the sectional view in Fig. 1. When viewed from above, the four tubular sections are distributed roughly, symmetrically around the center of the chamber. These additional tubular sections have windows for observing the inside of the chamber. In this configuration of the apparatus, the two additional tubular sections are not used directly to facilitate production of particles.

Collection system 108 preferably includes a curved channel 330 leading from collection nozzle 310. Because of the small size of the particles, the product particles follow the flow of the gas around curves. Collection system 108 includes a filter 332 within the gas flow to collect the product particles. Due to curved section 330, the filter is not supported directly above the chamber. A variety of materials such as Teflon^{®} (polytetrafluoroethylene), glass fibers and the like can be used for the filter as long as the material is inert and has a fine enough mesh to trap the particles. Preferred materials for the filter include, for example, a glass fiber filter from ACE Glass Inc., Vineland, NJ and cylindrical Nomex^{®} filters from AF Equipment Co., Sunnyvale, CA.

Pump 334 is used to maintain collection system 108 at a selected pressure. A variety of different pumps can be used. Appropriate pumps for use as pump 334 include, for example, Busch Model B0024 pump from Busch, Inc., Virginia Beach, VA with a pumping capacity of about 25 cubic feet per minute (cfm) and Leybold Model SV300 pump from Leybold Vacuum Products, Export, PA with a pumping capacity of about 195 cfm. It may be desirable to flow the exhaust of the pump through a scrubber 336 to remove any remaining reactive chemicals before venting into the atmosphere. The entire apparatus 100 can be placed in a fume hood for ventilation purposes and for safety considerations. Generally, the laser remains outside of the fume hood because of its large size.

The pumping rate is controlled by either a manual needle valve or an automatic throttle valve 338 inserted between pump 334 and filter 332. As the chamber pressure increases due to the accumulation of particles on filter 332, the manual valve or the throttle valve can be adjusted to maintain the pumping rate and the corresponding chamber pressure.

The apparatus is controlled by a computer 350. Generally, the computer controls the light source and monitors the pressure in the reaction chamber. The computer can be used to control the flow of reactants and/or the shielding gas.

The reaction can be continued until sufficient particles are collected on filter 332 such that pump 334 can no longer maintain the desired pressure in the reaction chamber 104 against the resistance through filter 332. When the pressure in reaction chamber 104 can no longer be maintained at the desired value, the reaction is stopped, and filter 332 is removed. With this embodiment, about 1-300 grams of particles can be collected in a single run before the chamber pressure can no longer be maintained. A single run generally can last up to about 10 hours depending on the reactant delivery system, the type of particle being produced and the type of filter being used.

The reaction conditions can be controlled relatively precisely. In particular, the mass flow controllers are quite accurate. The laser generally has about 0.5 percent power stability. With either a manual control or a throttle valve, the chamber pressure can be controlled to within about 1 percent.

The configuration of the reactant supply system 102 and the collection system 108 can be reversed. In this alternative configuration, the reactants are supplied from the top of the reaction chamber, and the product particles are collected from the bottom of the chamber. In the alternative configuration, the collection system may not include a curved section so that the collection filter is mounted directly below the reaction chamber.

An alternative design of a laser pyrolysis apparatus has been described in U.S. Patent 5,958,348 to Bi et al., entitled "Efficient Production of Particles by Chemical Reaction," incorporated herein by reference. This alternative design is intended to facilitate production of commercial quantities of particles by laser pyrolysis. Additional embodiments and other appropriate features for commercial capacity laser pyrolysis apparatuses are described in copending and commonly assigned U.S. Patent Application Serial No. 09/362,631 to Mosso et al., entitled "Particle Production Apparatus," incorporated herein by reference.

In one preferred embodiment of a commercial capacity laser pyrolysis apparatus, the reaction chamber is elongated along the light beam to provide for an increase in the throughput of reactants and products. The original design of the apparatus was based on the introduction of purely gaseous reactants. The embodiments described above for the delivery of aerosol reactants can be adapted for the elongated reaction chamber design. Additional embodiments for the introduction of an aerosol with one or more aerosol generators into an elongated reaction chamber is described in commonly assigned and copending U.S. Patent application serial No. 09/188,670 to Gardner et al., entitled "Reactant Delivery Apparatuses," incorporated herein by reference.

In general, the laser pyrolysis apparatus with the elongated reaction chamber is designed to reduce contamination of the chamber walls, to increase the production capacity and to make efficient use of resources. To accomplish these objectives, the elongated reaction chamber provides for an increased throughput of reactants and products without a corresponding increase in the dead volume of the chamber. The dead volume of the chamber can become contaminated with unreacted compounds and/or reaction products. Furthermore, an appropriate flow of shielding gas confines the reactants and products within a flow stream through the reaction chamber. The high throughput of reactants makes efficient use of the laser energy.

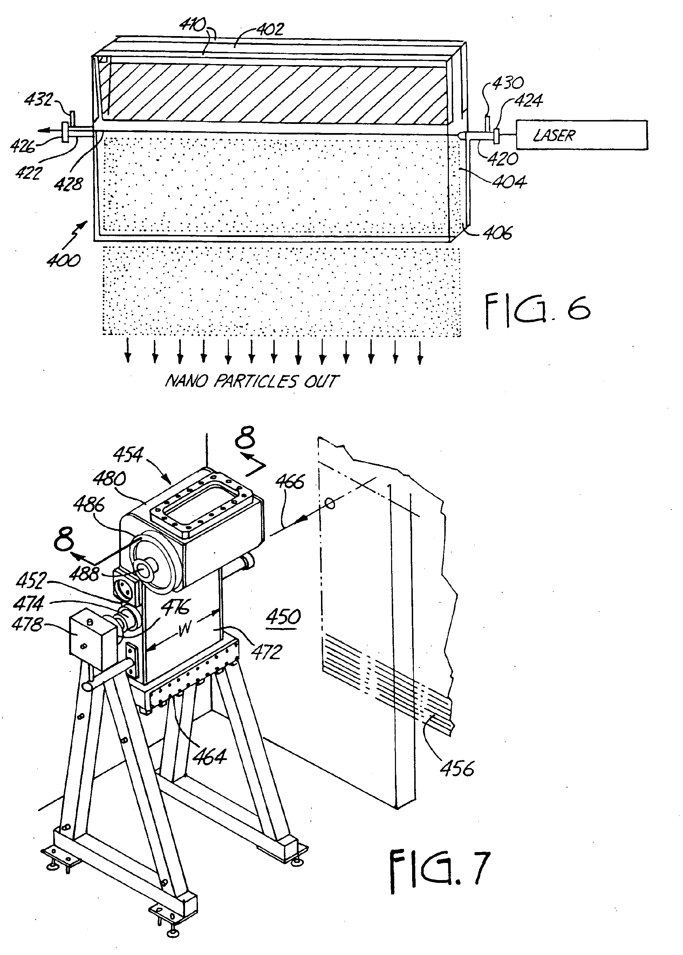

The design of the improved reaction chamber 400 is shown schematically in Fig. 6. A reactant inlet 402 leads to main chamber 404. Reactant inlet 402 conforms generally to the shape of main chamber 404. Main chamber 404 includes an outlet 406 along the reactant/product stream for removal of particulate products, any unreacted gases and inert gases. Shielding gas inlets 410 are located on both sides of reactant inlet 402. Shielding gas inlets are used to form a blanket of inert gases on the sides of the reactant stream to inhibit contact between the chamber walls and the reactants or products.

Tubular sections 420, 422 extend from the main chamber 404. Tubular sections 420, 422 hold windows 424, 426 to define a light beam path 428 through the reaction chamber 400. Tubular sections 420, 422 can include inert gas inlets 430, 432 for the introduction of inert gas into tubular sections 420, 422.

The improved reaction system includes a collection apparatus to remove the nanoparticles from the reactant stream. The collection system can be designed to collect particles in a batch mode with the collection of a large quantity of particles prior to terminating production. Alternatively, the collection system can be designed to run in a continuous production mode by switching between different particle collectors within the collection apparatus or by providing for removal of particles without exposing the collection system to the ambient atmosphere. An preferred embodiment of a collection apparatus for continuous particle production is described in copending and commonly assigned U.S. Patent application serial number 09/107,729 to Gardner et al., entitled "Particle Collection Apparatus And Associated Methods," incorporated herein by reference. The collection apparatus can include curved components within the flow path similar to curved portion of the collection apparatus shown in Fig. 1.

Referring to Fig. 7, a specific embodiment 450 of a laser pyrolysis reaction system with an elongated reaction chamber is shown. In this embodiment, the reaction chamber can be used with a reaction delivery apparatus designed for the delivery of only gaseous reactants or with an reactant delivery apparatus that can deliver aerosol reactants along with any desired gases. Laser pyrolysis reaction apparatus 450 includes reaction chamber 452, a particle collection apparatus 454, light source 456 and a reactant delivery system attached at inlet 464.

Reaction chamber 452 includes inlet 464 at the bottom of reaction chamber 452 where the reactant delivery apparatus connects with reaction chamber 452. Nozzles associated with the reactant delivery apparatus can extend into reaction chamber 452 and seal from the ambient atmosphere at inlet 464. Gaseous reactants can be delivered through a nozzle elongated to conform generally to the elongation of reaction chamber 452. Similarly, aerosols can be delivered to account for the elongated shape of the reaction chamber.

In this embodiment, the reactants are delivered from the bottom of reaction chamber 452 while the products are collected from the top of reaction chamber 452. The configuration can be reversed with the reactants supplied from the top and product collected from the bottom, as shown schematically in Fig. 6. Shielding gas conduits can be located in appropriate positions around the reactant delivery nozzle extending into reactant inlet 464. The shielding gas conduits direct shielding gas along the walls of reaction chamber 452 to inhibit association of reactant gases or products with the walls.

Reaction chamber 452 is elongated along one dimension denoted in Fig. 7 by "w". A laser beam path 466 enters reaction chamber 452 through a window 468 displaced along a tube 470 from main chamber 472 and traverses the elongated direction of reaction chamber 452. The laser beam passes through tube 474 and exits window 476. In one preferred embodiment, tubes 470 and 474 displace windows 468 and 476 about 11 inches from main chamber 472. The laser beam terminates at beam dump 478. In operation, the laser beam intersects a reactant stream generated from the nozzle inserted through reactant inlet 464.

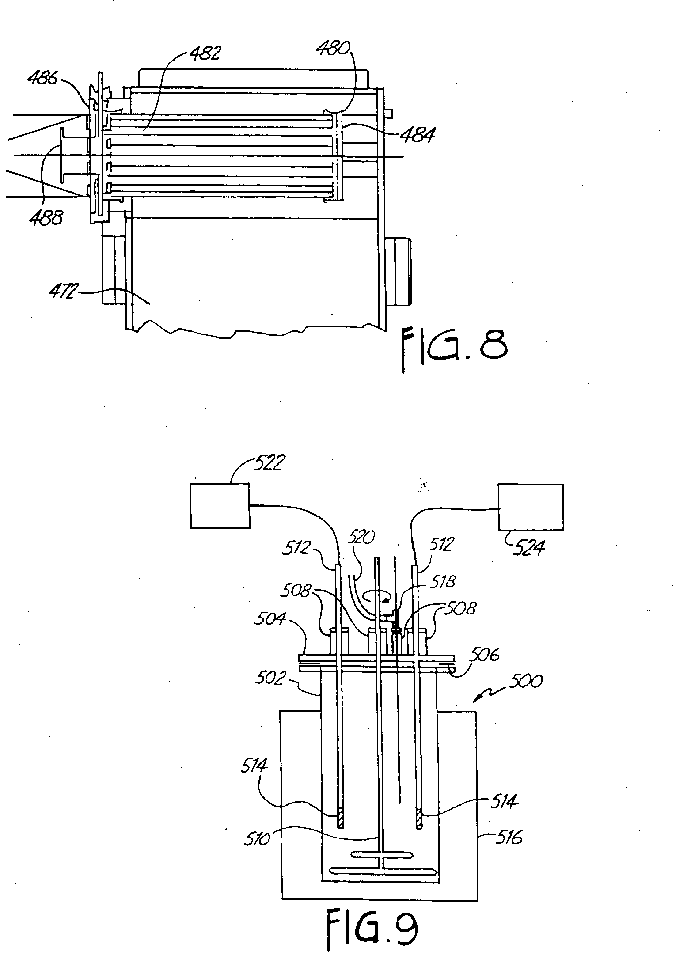

The top of main chamber 472 opens into particle collection system 454. Particle collection system 454 includes outlet duct 480 connected to the top of main chamber 472 to receive the flow from main chamber 472. Outlet duct 480 carries the product particles out of the plane of the reactant stream to a cylindrical filter 482, as shown in Fig. 8. Filter 482 has a cap 484 on one end to block direct flow into the center of filter 482. The other end of filter 482 is fastened to disc 486. Vent 488 is secured to the center of disc 486 to provide access to the center of filter 482. Vent 488 is attached by way of ducts to a pump.

Thus, product particles are trapped on filter 482 by the flow from the reaction chamber 452 to the pump. Suitable pumps were described above with respect to the first laser pyrolysis apparatus in Fig. 1. Suitable filters for use as filter 482 include, for example, an air cleaner filter for a Saab 9000 automobile (Purilator part A44-67), which is wax impregnated paper with a Plasticol^{™} or polyurethane end cap 484.

The collection apparatus shown in Figs. 7 and 8 is suitable for the operation of reaction chamber 452 in batch mode, where operation is stopped when filter 482 can no longer collect additional particles. Alternative collection apparatuses are suitable for operating reaction chamber 452 in continuous operation, as described above. The dimensions of elongated reaction chamber 452 and reactant inlet 464 preferably are designed for high efficiency particle production. Reasonable dimensions for reactant inlet 464 for the production of ceramic nanoparticles, when used with a 1800 watt CO₂ laser, are from about 5 mm to about 1 meter.

### B. Heat Treatment of Nanoparticles

As noted above, properties of nanoparticles can be modified by heat processing. Suitable starting material for the heat treatment include nanoparticles produced by laser pyrolysis. In addition, nanoparticles used as starting material can have been subjected to one or more prior heating steps under different conditions. For the heat processing of nanoparticles formed by laser pyrolysis, the additional heat processing can improve the crystallinity, remove contaminants, such as elemental carbon, and possibly alter the stoichiometry, for example, by incorporation of additional oxygen or of atoms from other gaseous or nongaseous compounds.

The nanoparticles are preferably heated in an oven or the like to provide generally uniform heating. The processing conditions generally are mild, such that significant amounts of particle sintering does not occur. Thus, the temperature of heating preferably is low relative to the melting point of both the starting material and the product material.

The atmosphere over the particles can be static, or gases can be flowed through the system. The atmosphere for the heating process can be an oxidizing atmosphere or an inert atmosphere. In particular, for conversion of amorphous particles to crystalline particles or from one crystalline structure to a different crystalline structure of essentially the same stoichiometry, the atmosphere generally can be inert.

Appropriate oxidizing gases include, for example, O₂, O₃, CO, CO₂, and combinations thereof. The O₂ can be supplied as air. Oxidizing gases optionally can be mixed with inert gases such as Ar, He and N₂. When inert gas is mixed with the oxidizing gas, the gas mixture can include from about 1 percent oxidizing gas to about 99 percent oxidizing gas, and more preferably from about 5 percent oxidizing gas to about 99 percent oxidizing gas. Alternatively, either essentially pure oxidizing gas or pure inert gas can be used, as desired. In other alternative embodiments, a reducing gas is used. Suitable reducing gases include H₂.

The precise conditions can be altered to vary the type of nanoparticles that are produced. For example, the temperature, time of heating, heating and cooling rates, the gases and the exposure conditions with respect to the gases can all be selected to produce desired product particles. Generally, while heating under an oxidizing atmosphere, the longer the heating period the more oxygen that is incorporated into the material, prior to reaching equilibrium. Once equilibrium conditions are reached, the overall conditions determine the crystalline phase of the powders.

A variety of ovens or the like can be used to perform the heating. An example of an apparatus 500 to perform this processing is displayed in Fig. 9. Apparatus 500 includes a jar 502, which can be made from glass or other inert material, into which the particles are placed. Suitable glass reactor jars are available from Ace Glass (Vineland, NJ). The top of glass jar 502 is sealed to a glass cap 504, with a Teflon^{®} gasket 506 between jar 502 and cap 504. Cap 504 can be held in place with one or more clamps. Cap 504 includes a plurality of ports 508, each with a Teflon^{®} bushing. A multiblade stainless steel stirrer 510 preferably is inserted through a central port 508 in cap 504. Stirrer 510 is connected to a suitable motor.

One or more tubes 512 are inserted through ports 508 for the delivery of gases into jar 502. Tubes 512 can be made from stainless steel or other inert material. Diffusers 514 can be included at the tips of tubes 512 to disburse the gas within jar 502. A heater/furnace 516 generally is placed around jar 502. Suitable resistance heaters are available from Glas-col (Terre Haute, IN). One port preferably includes a T-connection 518. The temperature within jar 502 can be measured with a thermocouple 518 inserted through T-connection 518. T-connection 518 can be further connected to a vent 520. Vent 520 provides for the venting of gas circulated through jar 502. Preferably vent 520 is vented to a fume hood or alternative ventilation equipment.

Preferably, desired gases are flowed through jar 502. Tubes 512 generally are connected to an oxidizing gas source and/or an inert gas source. Oxidizing gas, inert gas or a combination thereof to produce the desired atmosphere are placed within jar 502 from the appropriate gas source(s). Various flow rates can be used. The flow rate preferably is between about 1 standard cubic centimeters per minute (sccm) to about 5000 sccm and more preferably from about 100 sccm to about 2000 sccm. The flow rate generally is constant through the processing step, although the flow rate and the composition of the gas can be varied systematically over time during processing, if desired. Alternatively, a static gas atmosphere can be used.

For the processing of nanoparticles of many of the materials described herein, the appropriate temperature generally depends on the particular material being processed. For most materials, suitable temperatures range from about 50°C to about 700°C and in most circumstances from about 60°C to about 600°C. The heating generally is continued for greater than about 5 minutes, and typically is continued for from about 1 hours to about 120 hours, in most circumstances from about 1 hours to about 25 hours. Preferred heating temperatures and times will depend on the particular starting material and target product. Some empirical adjustment may be required to produce the conditions appropriate for yielding a desired material. The use of mild conditions avoids interparticle sintering resulting in larger particle sizes. Some controlled sintering of the particles can be performed at somewhat higher temperatures to produce slightly larger, average particle diameters.

The conditions to convert crystalline VO₂ to orthorhombic V₂O₅ and 2-D crystalline V₂O₅, and amorphous V₂O₅ to orthorhombic V₂O₅ and 2-D crystalline V₂O₅ are described in copending and commonly assigned U.S. Patent application serial number 08/897,903, to Bi et al., entitled "Processing of Vanadium Oxide Particles With Heat".

Conditions for the removal of carbon coatings from metal oxide nanoparticles is described in U.S. Patent Application Serial No. 09/123,255, entitled "Metal (Silicon) Oxide/Carbon Composite Particles".

The incorporation of lithium from a lithium salt into metal oxide nanoparticles in a heat treatment process is described in copending and commonly assigned U.S. Patent Application Serial No. 09/311,506 to Reitz et al., entitled "Metal Vanadium Oxide Particles," and in copending and commonly assigned U.S. Patent Application Serial No. 09/334,203 to Kumar et al., entitled "Reaction Method For Producing Ternary Particles".

### C. Properties of the Particles

A collection of particles of interest generally has an average diameter for the primary particles of less than about 500 nm, preferably from about 5 nm to about 100 nm, more preferably from about 5 nm to about 75 nm, and even more preferably from about 5 nm to about 50 nm. Particle diameters are evaluated by transmission electron microscopy. Preferred particles comprise a metal oxide or a metal sulfide.

The primary particles usually have a roughly spherical gross appearance. Upon closer examination, crystalline particles generally have facets corresponding to the underlying crystal lattice. Nevertheless, crystalline primary particles tend to exhibit growth that is roughly equal in the three physical dimensions to give a gross spherical appearance. Amorphous particles generally have an even more spherical aspect. In preferred embodiments, 95 percent of the primary particles, and preferably 99 percent, have ratios of the dimension along the major axis to the dimension along the minor axis less than about 2. Diameter measurements on particles with asymmetries are based on an average of length measurements along the principle axes of the particle.

Because of their small size, the primary particles tend to form loose agglomerates due to van der Waals and other electromagnetic forces between nearby particles. These agglomerates can be dispersed to a significant degree. The secondary or agglomerated particle size depends on the approach used to disperse the particles following their initial formation. The degree of dispersion generally depends on the fluid/liquid used to disperse the particles, the pH, ionic strength and the presence of dispersants, such as surfactants. Nanoparticles produced by laser pyrolysis generally can be well dispersed, as described further in copending and commonly assigned U.S. Patent Application Serial No. / , to Reitz et al., filed on November 4, 1999, entitled "Particle Dispersions".

Even though the particles form loose agglomerates, the nanometer scale of the primary particles is clearly observable in transmission electron micrographs of the particles. The particles generally have a surface area corresponding to particles on a nanometer scale as observed in the micrographs. Furthermore, the particles can manifest unique properties due to their small size and large surface area per weight of material. For example, vanadium oxide nanoparticles can exhibit surprisingly high energy densities in lithium batteries, as described in U.S. Patent 5,952,125 to Bi et al., entitled "Batteries With Electroactive Nanoparticles".

The primary particles preferably have a high degree of uniformity in size. Laser pyrolysis, as described above, generally results in particles having a very narrow range of particle diameters. Furthermore, heat processing under suitably mild conditions does not alter the very narrow range of particle diameters. With aerosol delivery of reactants for laser pyrolysis, the distribution of particle diameters is particularly sensitive to the reaction conditions. Nevertheless, if the reaction conditions are properly controlled, a very narrow distribution of particle diameters can be obtained with an aerosol delivery system. As determined from examination of transmission electron micrographs, the primary particles generally have a distribution in sizes such that at least about 95 percent, and preferably 99 percent, of the primary particles have a diameter greater than about 40 percent of the average diameter and less than about 160 percent of the average diameter. Preferably, the primary particles have a distribution of diameters such that at least about 95 percent, and preferably 99 percent, of the primary particles have a diameter greater than about 60 percent of the average diameter and less than about 140 percent of the average diameter.

Furthermore, in preferred embodiments no primary particles have an average diameter greater than about 4 times the average diameter and preferably 3 times the average diameter, and more preferably 2 times the average diameter. In other words, the particle size distribution effectively does not have a tail indicative of a small number of particles with significantly larger sizes. This is a result of the small reaction region and corresponding rapid quench of the particles. An effective cut off in the tail of the size distribution indicates that there are less than about 1 particle in 10⁶ have a diameter greater than a specified cut off value above the average diameter. Narrow size distributions, lack of a tail in the distributions and the roughly spherical morphology can be exploited in a variety of applications.

In addition, the nanoparticles generally have a very high purity level. The nanoparticles produced by the above described methods are expected to have a purity greater than the reactants because the laser pyrolysis reaction and, when applicable, the crystal formation process tends to exclude contaminants from the particle. Furthermore, crystalline nanoparticles produced by laser pyrolysis have a high degree of crystallinity. Similarly, the crystalline nanoparticles produced by heat processing have a high degree of crystallinity. Impurities on the surface of the particles may be removed by heating the particles to achieve not only high crystalline purity but high purity overall.

Several different types of nanoscale electroactive particles have been produced by laser pyrolysis with or without additional processing. The production of vanadium oxide nanoparticles and the production of batteries based on these particles are described in copending and commonly assigned U.S. Patent Application Serial No. 08/897,778 to Bi et al., entitled "Vanadium Oxide Nanoparticles," and U.S. Patent 5,952,125 to Bi. et al., entitled "Batteries with Electroactive Nanoparticles".

Surprising high energy densities have been obtained with these vanadium oxide nanoparticles.

Similarly, silver vanadium oxide nanoparticles have been produced, as described in copending and commonly assigned U.S. Patent Applications Serial Nos. 09/246,076 to and 09/311,506 to , both entitled "Metal Vanadium Oxide Particles".

For these materials surprisingly high specific capacities have been observed.

Also, nanoscale manganese oxide particles have been formed by laser pyrolysis. The production of these particles is described in copending and commonly assigned U.S. Patent Application Serial No. 09/188,770 to Kumar et al., entitled "Metal Oxide Particles".

Furthermore, lithium manganese oxide nanoparticles have been produced by laser pyrolysis along with subsequent heat processing, as described in copending and commonly assigned U.S. Patent Applications Serial No. 09/188,768 to Kumar et al., entitled "Composite Metal Oxide Particles," Serial No. 09/203,414 to Horne et al., entitled "Lithium Manganese Oxides and Batteries," and 09/334,203 to Kumar et al., entitled "Reaction Methods for Producing Ternary Particles".

It has been observed that nanoscale lithium manganese oxide particles placed in a cathode of a lithium based battery can cycle reversibly over a larger voltage range than bulk materials. The use of nanoscale lithium manganese oxide particles in lithium based batteries is also described in U.S. Patent 5,807,646 to Iwata et al., entitled "Spinel Type Lithium-Manganese Oxide Material, Process for Preparing the Same and Use Thereof ".

In addition, tin oxide nanoparticles have been produced by laser pyrolysis, as described in copending and commonly assigned U.S. Patent Application Serial No. 09/042,227 to Kumar et al., entitled "Tin Oxide Particles". Tin oxide particles are suitable for use as electroactive material in a negative electrode of a lithium based batteries.

Molybdenum disulfide (MoS₂) nanoparticles have also been produced by laser pyrolysis, as described in Brandow et al., "Electronic and vibrational properties of Rb-intercalated MoS2 nanoparticles, " Material Science and Engineering vol. A204, 222-226 (1995).

Molybdenum carbonyl (Mo(CO)₆) and H₂S were used as precursors, and C₂H₂ was used as a laser absorbing gas.

### D. Battery Structures and Compositions

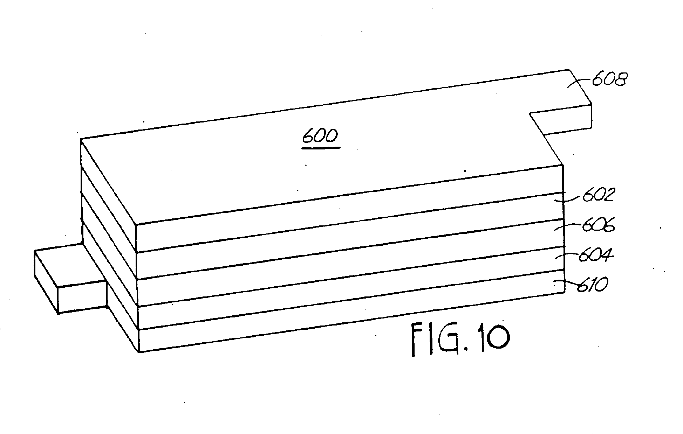

Referring to Fig. 10, a battery 600 generally includes a negative electrode 602, a positive electrode 604 and separator 606 between negative electrode 602 and positive electrode 604. A single battery can include multiple positive electrodes and/or negative electrodes. Electrolyte can be supplied for the battery in a variety of ways as described further below. Battery 600 preferably includes current collectors 608, 610 associated with negative electrode 602 and positive electrode 604, respectively. Multiple current collectors can be associated with each electrode if desired.

Lithium has been used in reduction/oxidation reactions in batteries because it is the lightest metal and because it is the most electropositive metal. The electrolyte then includes lithium ions. Thus, lithium metal or lithium metal alloys can be used as negative electrodes in batteries. Such batteries are commonly referred to as lithium batteries. Alternatively, negative electrodes can include electroactive compositions that intercalate lithium ions, which results in a net reduction of the electrode including the intercalated ions. Batteries with positive electrodes and negative electrodes containing lithium intercalation compounds and a liquid, lithium containing electrolyte commonly are referred to as lithium ion batteries. Similarly, batteries with positive electrodes and negative electrodes containing lithium intercalation compounds and solid polymer electrolytes containing lithium commonly are referred to as lithium polymer batteries. Nanoparticles can be used to form thin non-lithium based batteries that also have the improved features described herein.

Some electroactive materials undergo reversible or partly reversible changes during discharge and can be recharged. Such cyclable materials can be used to form secondary, i.e., rechargeable batteries. Other materials undergo irreversible or nearly irreversible changes during discharge. These irreversible materials are suitable for forming primary batteries. Cyclable electroactive materials can be used in the formation of primary batteries, if desired.

Lithium intercalates into the lattice of the electroactive material of the positive electrode during discharge of the battery. Similarly, lithium ions leave the lattice of the negative electrode during discharge. Upon discharge, the positive electrode acts as a cathode and the negative electrode acts as an anode. For secondary batteries, the lithium leaves the lattice of the positive electroactive material upon recharging, i.e., when a voltage is applied to the cell such that electric current flows into the positive electrode due to the application of an external EMF to the battery. Similarly, lithium intercalates into the lattice of the negative electrode during recharging.

Negative electrode 602 can be constructed from a variety of materials that are suitable for use with lithium ion electrolytes. For example, negative electrode 602 may include electroactive nanoparticles, which may be held with a binder. In the case of lithium batteries, the negative electrode can include lithium metal or lithium alloy metal either in the form of a foil, grid or metal particles, possibly with a binder.

Lithium ion batteries use particles of a composition that can intercalate lithium into the negative electrode. The particles can be held in the negative electrode with a binder. Suitable intercalation compounds include, for example, graphite, synthetic graphite, coke, mesocarbons, doped carbons, fullerenes, niobium pentoxide, tin alloys, SnO₂, lithium titanium oxide, and mixtures, composites and derivative thereof. The production of tin oxide nanoparticles is described in copending and commonly assigned U.S. Patent Application Serial No. 09/042,227 to Kumar et al., entitled "Tin Oxide Particles".

Referring to Fig. 10, positive electrode 604 includes lithium intercalating electroactive nanoparticles such as lithium manganese oxide nanoparticles, which may be held together with a binder such as a polymeric binder. For the production of lithium based batteries, suitable electroactive compounds for use in the positive electrode include, for example, vanadium oxide, silver vanadium oxide, manganese oxide, titanium oxide, lithium manganese oxide, lithium cobalt oxide, lithium nickel oxide, lithium titanium oxide, iron sulfides, molybdenum sulfide and mixtures, composites and derivative thereof.

Nanoparticles for use in negative electrode 602 or positive electrode 604 generally can have any shape, e.g., roughly spherical nanoparticles or elongated nanoparticles. Negative electrode 602 or positive electrode 604 can include a plurality of collections of nanoparticles each having a different composition, for example, a positive electrode with a combination of lithium manganese oxide particles and vanadium oxide particles.

While some electroactive materials are reasonable electrical conductors, a positive electrode and particle based negative electrode generally include electrically conductive particles in addition to the electroactive nanoparticles. These supplementary, electrically conductive particles generally are also held by the binder. The electrically conductive particles preferably have an average diameter less than about 500 nm and more preferably less than 100 nm and more preferably from about 5 nm to about 50 nm. Having nanoscale electrically conductive particles in the electrodes provides for a high packing density of all the particles as well as for a smooth and thin electrode. Typically, electrically conductive particles with an average diameter smaller than the average diameter of the electroactive particles are used to obtain a good dispersion of electroactive particles within the electrode at a low weight percent of electrically conductive particles. Suitable electrically conductive particles include conductive carbon particles such as carbon black, graphite, amorphous carbon, carbon fibers, exfoliated graphite, metal particles such as silver particles, stainless steel fibers and the like. Nanoscale electrically conductive carbon black is commercially available. In particular, acetylene black is commercially available with an average diameter from about 30 to about 45 nm.

In addition, nanoparticles of noble metals, including silver, have been produced by laser pyrolysis. The production of silver particles with average diameters less than about 100 nm is described in copending and commonly assigned U.S. Patent Application Serial No. 09/311,506 to Kumar et al., entitled "Metal Vanadium Oxide Particles".

Particularly good electrical conductivity at low carbon concentrations can be obtained with expanded graphite. Expanded graphite has separate graphine layers that are randomly oriented. Electroactive particles can pack around the expanded graphite planes. Expanded graphites are available from Superior Graphite Co., Chicago, IL.

High loadings of particles can be achieved with a binder. Particles preferably make up greater than about 80 percent by weight of the positive electrode, and more preferably greater than about 90 percent by weight. Due to the small size of the nanoparticles, the electroactive particles can pack very tightly within the electrode. Thus, very high tapping densities, i.e., electroactive particle densities, can be obtained. Use of preferred, highly uniform electroactive particles and binders helps to achieve even higher values of density of electroactive particles. The densities of electroactive particles will depend on the material involved since different materials have different inherent densities. For electroactive nanoparticles generally, the densities in the electrodes will range from about 1.4 g/cm³ to about 7.1 g/cm³. Nevertheless, the density of electroactive lithium manganese oxide particles in an electrode can be greater than about 2.0 g/cm³, preferably from about 2.05 to about 2.7 g/cm³, and more preferably from about 2.10 to about 2.7 g/cm³.

A binder can be any of various suitable polymers such as polyvinylidene fluoride, polyethylene oxide, polyethylene, polypropylene, polytetrafluoro ethylene; polyacrylates, ethylene-(propylene-diene monomer) copolymer (EPDM) and mixtures and copolymers thereof. For binding nanoparticles, polymer binders with a higher molecular weight and corresponding lower crystallinity and greater flexibility are preferred.

Current collectors 608, 610 facilitate flow of electricity from battery 600. Current collectors 608, 610 are electrically conductive and generally made of metal such as nickel, iron, stainless steel, aluminum and copper and can be metal foil or preferably a metal grid. The current collectors can be formed as a thin layer of electrically conductive nanoparticles, possibly bound with the same binder as the electroactive particles. Current collector 608, 610 can be on the surface of their associated electrode or embedded within their associated electrode. The desirable properties of the current collector depend on the structure and use of the battery. For integrated battery components described below, the current collectors can be thinner since the current does not need to travel large distances and the value of the current is generally smaller.

The separator element 606 is electrically insulating and provides for passage of at least some types of ions. Ionic transmission through the separator provides for electrical neutrality in the different sections of the cell to compensate for current flow. The separator generally prevents electroactive compounds in the positive electrode from contacting electroactive compounds in the negative electrode. The separator can be used along with a liquid electrolyte, such that the separator acts solely as a physical barrier. Alternatively, the separator can include electrolyte within the separator structure, such that no liquid electrolyte is needed. In these cases the unified separator and electrolyte is referred to as a solid electrolyte. Generally, the solid electrolyte is formed with a polymer matrix, and the resulting structure is referred to as a solid polymer electrolyte. In addition, solid state separators are possible based on inorganic materials. For example, suitable solid state electrolytes include, for example, lithium phosphorous oxynitride (LIPON), Li_{0.33}La_{0.56}TiO₃ (see Brouse et al., J. Power Sources 68:412 (1997)) and Li₂ₓSr₁₋₂ₓM_{0.5-x}Ti_{0.5+x}O₃ where M is a metal, such as Cr, Fe, Co, Al, In or Y, with a preferred form being Li_{0.5}Sr_{0.5}(Fe or Cr)_{0.25}Ti_{0.75}O₃ (see Watanade, J. Power Sources 68: 421 (1997).

A variety of materials can be used for the separator. For example, the separator can be formed from glass fibers that form a porous matrix. Preferred separators are formed from polymers such as those suitable for use as binders. Polymer separators can be porous to provide for ionic conduction. If the polymer in the separator is identical to the polymer binder in the electrode, an electrode separator structure can be formed where there is a resulting concentration gradient of electroactive particles in a continuous polymer phase.

Solid electrolytes include lithium ions within the solid matrix. Solid electrolytes based on polymers, such as polyethylene oxide, incorporate electrolyte into the polymer matrix to provide for ionic conduction without the need for liquid solvent.

U.S. Patent 4,830,939 to Lee et al., entitled "Radiation Cured Solid Electrolyte and Electrochemical Devices Employing Same", described the use of polyethylenically unsaturated compounds for the formation of solid electrolytes. The compounds preferably include a plurality of hetero atoms, such as oxygen and nitrogen, and radiation polymerizable terminating groups. The radiation curable electrolyte mixture includes the polymerizable polymer, an inert liquid and a lithium salt.

U.S. Patent 5,037,712 to Shackle et al., entitled "Preparation of Radiation Cured Solid Electrolytes and Electrochemical Devices Employing the Same", describes the use of crosslinkable polysiloxane or polyethylene oxide. The crosslinkable polymer is mixed with an ionically conducting liquid and a suitable salt prior to exposure to actinic radiation to crosslink the material.

Electrolytes for lithium batteries or lithium ion batteries can include any of a variety of lithium salts. Preferred lithium salts have inert anions and are nontoxic. Suitable lithium salts include, for example, lithium hexafluorophosphate, lithium hexafluoroarsenate, lithium bis(trifluoromethyl sulfonyl imide), lithium trifluoromethane sulfonate, lithium tris(trifluoromethyl sulfonyl) methide, lithium tetrafluoroborate, lithium perchlorate, lithium tetrachloroaluminate, lithium chloride and lithium perfluorobutane.

If a liquid solvent is used to dissolve the electrolyte, the solvent preferably is inert and does not dissolve the electroactive materials. Generally appropriate solvents include, for example, propylene carbonate, dimethyl carbonate, diethyl carbonate, 2-methyl tetrahydrofuran, dioxolane, tetrahydrofuran, 1, 2-dimethoxyethane, ethylene carbonate, γ-butyrolactone, dimethyl sulfoxide, acetonitrile, formamide, dimethylformamide and nitromethane.

The shape of the battery components can be adjusted to be suitable for the desired final product, for example, a coin battery, a rectangular construction or a cylindrical battery. The battery generally includes a casing with appropriate portions in electrical contact with current collectors and/or electrodes of the battery. If a liquid electrolyte is used, the casing should prevent the leakage of the electrolyte. The casing can help to maintain the battery elements in close proximity to each other to reduce electrical resistance and diffusional resistance within the battery. A plurality of battery cells can be placed in a single case with the cells connected either in series or in parallel.

### E. Thin Electrodes and Batteries Based on Nanoparticles

Electroactive nanoparticles provide very high current densities and, thus, high power densities due to the high surface area of the nanoparticles. Furthermore, if additional components of the electrodes are appropriately selected the electrodes can be made very smooth. The use of nanoparticles components with a narrow particle size distribution is particularly advantageous for the formation very smooth electrode surfaces. The lack of larger particles due to a tail in the particle size distribution reduces the likelihood of having rough locations on the electrode surface due to an unusually large particle at that location. In particular, an electrode for the formation of thin structures of interest has a root mean square surface roughness less than
one µm (micron), preferably less than about 500 nm, and even more preferably from about 100 nm to about 250 nm. Surface roughness measurements described herein are obtained by atomic force microscopy. Comparable results can be obtained using stilus based measurements, as are used in the semiconductor industry.. Having very smooth electrodes helps with the production of very thin electrodes and batteries.

Improved battery structures described herein include at least one electrode that is very thin. These thin electrodes preferably have an average thickness less than about 5 µm (micron). In some embodiments, the electrodes have a thickness from about 100 nm to about 5 microns, more preferably from about 250 nm to about 2.5 microns and even more preferably from about 300 nm to about 1 micron.

In some desired embodiments, improved battery structures have two thin electrodes, each less than ten microns thick. In addition, the separator is also thin. Preferred separators are less than about 10 microns, preferably from about 100 nm to about 5 microns, more preferably from about 250 nm to about 2.5 microns, and even more preferably from about 300 nm to about 1 micron. The separator must provide an electrically insulating layer between the positive electrode and the negative electrode. If the electrodes are smoother, a thinner separator can be used without undesirably increasing the risk of breaching the separator. Since the separator performed does not contribute to the battery load, there are no detrimental effects of reducing the separator thickness as long as the separator provides electrical insulation between the positive and negative electrodes.

Similarly, for the production of very thin battery structures, any current collectors should be very thin. Appropriate thicknesses for the current collectors depend on the battery construction. For integrated battery structures, described below, the current collectors are preferably less than about 0.5 microns thick and more preferably from about 0.05 microns to about 0.25 microns. A thin layer of metal as a current collector can be deposited by vapor deposition approaches, such as evaporative deposition, sputtering and the like.

For the construction of standard batteries using thin battery constructions, current must flow over larger distances within the battery, so that thicker current collectors are needed to reduce resistance. For these applications, the current collector generally is less than about 10 micron thick, preferably less than about 5 microns thick, more preferably less than 2.5 microns and even more preferably from about 0.25 microns to about 1 microns thick. The current collectors can be vapor deposited, or the current collectors can be formed from thin metal foil as a sheet or as a grid. Similarly, thin metalized polyesters can be used as current collectors. Thin metalized polyesters are used by Carli Electronics Ltd., Taiwan for the manufacture of capacitors.

Thus, the improved battery structure would have positive electrode, negative electrode, separator and any current collectors with a combined thickness less than about 50 microns, preferably less than about 20 microns, and more preferably from about 1 micron to about 10 microns. For integrated batteries, the battery structures have a thickness from about 500 nm to about 15 microns, more preferably from about 1 micron to about 7.5 microns and even more preferably from about 1 micron to about 5 microns. These thin battery structures can have very high energy densities.

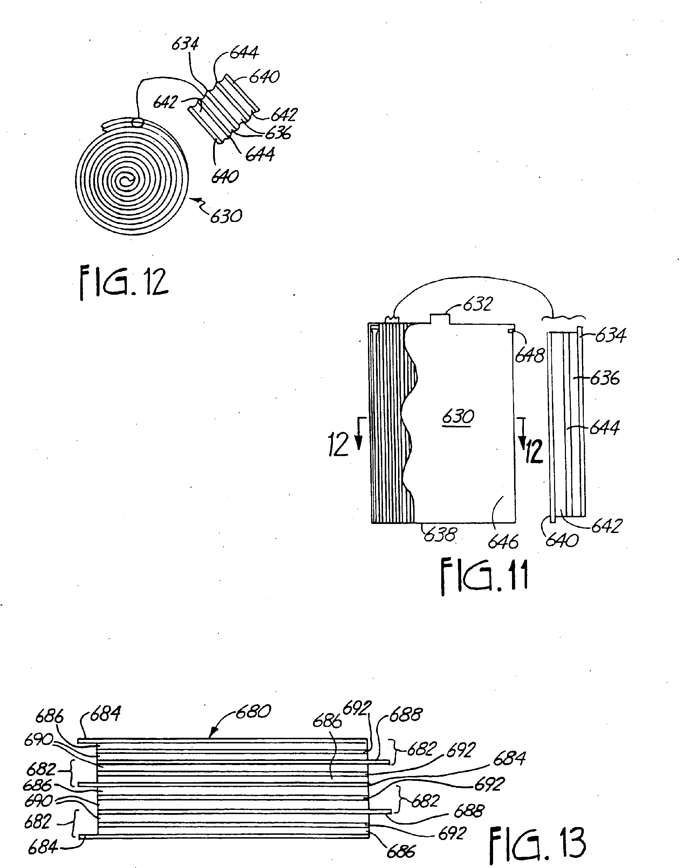

The thin battery structures are particularly useful, for example, in the production of integrated battery components, as described below. In addition, a variety of other improved battery structures can be formed from the thin battery components. For example, very large sheets can be constructed of the very thin battery structures described above. These sheets can be rolled to produce a cylindrical cell, as shown in Figs. 11 and 12. Cell 630 has a positive contact 632 electrically connected with a current collector 634 associated with positive electrode 636 and a negative contact 638 in electrical contact with a current collector 640 associated with negative electrode 642. Separator 644 is located between positive electrode 636 and negative electrode 642. Separator 644 can be a solid polymer electrolyte or a separator element used with a liquid electrolyte. Positive electrode 636 and/or negative electrode 642 can be include separately identifiable current collectors. The rolled electrodes 636, 642 and separator 644 are placed within a sealed container 646 that connects with positive contact 632 and negative contact 638 such that an electrically insulating barrier 648 separate positive contact 632 and negative contact 638.

Smaller thin battery structures can be combined in parallel and/or in series to produce similar advantages. Referring to Fig. 13, battery 680 includes a stack of thin battery cells 682 connected in parallel. Adjacent cells have a current collector in common. Positive current collectors 684 are in electrical contact with positive electrodes 686, and negative current collectors 688 are in electrical contact with negative electrodes 690. Separators 692 are located between positive electrodes 684 and negative electrodes 688.

### F. Production of Thin Electrodes and Batteries

Several different approaches can be used to produce extremely thin electrodes. For example, nanoparticles can be dispersed to form a dispersion or slurry of the nanoparticles. The dispersion can include electroactive nanoparticles, electrically conductive nanoparticles and a binder. Suitable dispersants have a reasonably high vapor pressure such that they will evaporate relatively quickly after the electrode layer is formed. The dispersant preferably dissolves the binder such that the binder mixes relatively uniformly with the particles. A variety of organic solvents, such as alcohols, ketones, acetonitrile, esters, ethers and combinations thereof, can be used as the dispersant, depending on the particular binder. Surfactants or the like can be used to further the dispersion of the nanoparticles. The formation of dispersion of nanoparticles is described further in U.S. Patent Application Serial No. / , to Reitz et al., filed on November 4, 1999, entitled "Particle Dispersions".

Generally, the dispersions should contain from about 5 weight percent solids to about 60 weight percent solids.

The particle dispersion can then be applied by various coating techniques. For example, the dispersion can be applied by spray coating or spin coating. For spray coating, the nozzle can be designed to supply a relatively uniform thin coating. Spin coating similarly can provide a relatively uniform coating. The volume of the applied dispersion should be adjusted to yield a desired layer thickness following drying to remove the dispersant.

Spray coating techniques can be applied with the use of masks and the like to form structures of desired shapes. For example, the formation of batteries integrated within an integrated circuit is described below. Alternatively, rather than using a mask to form desired structures, the slurry can be applied with an ink jet print head. The nanoparticle slurry replaces the ink. The print head can be used to form a relatively uniform layer of nanoparticles in a desired shape. Generally, for ink jet application the dispersions have a concentration of less than about 5 percent by weight solids. The viscosities preferably are no more than about 100 cP. Other printing technologies, such as offset printing, can be used similarly to apply nanoparticle dispersions. Similarly, electrophoretic deposition can be used, in which an electric field is applied to a substrate in a dispersion of the particles. The particles associate with the substrate due to opposite charges on the surface of the particles.

Using these approaches, very thin and very smooth electrodes can be formed. In addition, due to the smoothness of the electrodes, thinner separators can be used. Thin separators/solid electrolytes can be formed, for example, by the vapor deposition of LIPON. LIPON can be deposited by RF magnetron sputtering of Li₃PO₄. LIPON formed RF magnetron sputtering has a typical composition of Li_{2.9}PO_{3.3}N_{0.46}. These thin electrodes and separators can be used to form thin batteries.

To form a battery structure, the components can be applied sequentially as coatings. This is particularly convenient for the preparation of very thin batteries. Thus, the first layer is applied to a substrate, which can be a permanent support structure, a temporary support structure from which the battery is later removed, or a battery element, such as a thin metal foil that forms a current collector. Suitable permanent support structures include, for example, an insulating layer on a solid support or a thin polymer sheet, which forms a very flexible battery. Temporary supports include, for example, nonstick polymer sheets, such as polytetrafluoroethylene (TEFLON^{®}), from which the battery can be removed to form a battery structure without the added weight and bulk of the substrate. After all of the desired layers are deposited, the battery structure can be formed into a desired shape, for example by rolling, if the shape is to be altered from the coated form.

### G. Production of Integrated Battery Components

Thin battery structures that can be formed from nanoparticles are particularly convenient for the formation of integrated batteries that form an integrated component of an integrated circuit. The formation of integrated batteries formed by vapor deposited continuous layers is described in an article by Park et al., entitled "All-Solid-State Lithium Thin-Film Rechargeable Battery with Lithium Manganese Oxide," in Electrochemical and Solid-State Letters, Vol. 2, No. 2, pp. 55-59 (1999). The use of nanoparticles has a distinct advantage that the composition and crystallinity of the electroactive materials can be manipulated prior to formation of the battery element. Manipulation in particulate form is considerable more versatile than manipulation following formation of the electrode. In addition, the overall composition of the electrode, including the presence of electrically conductive particles, can be manipulated to provide an electrode with preferred characteristics. At any time following the deposition of the particles some sintering of the particles can be performed.

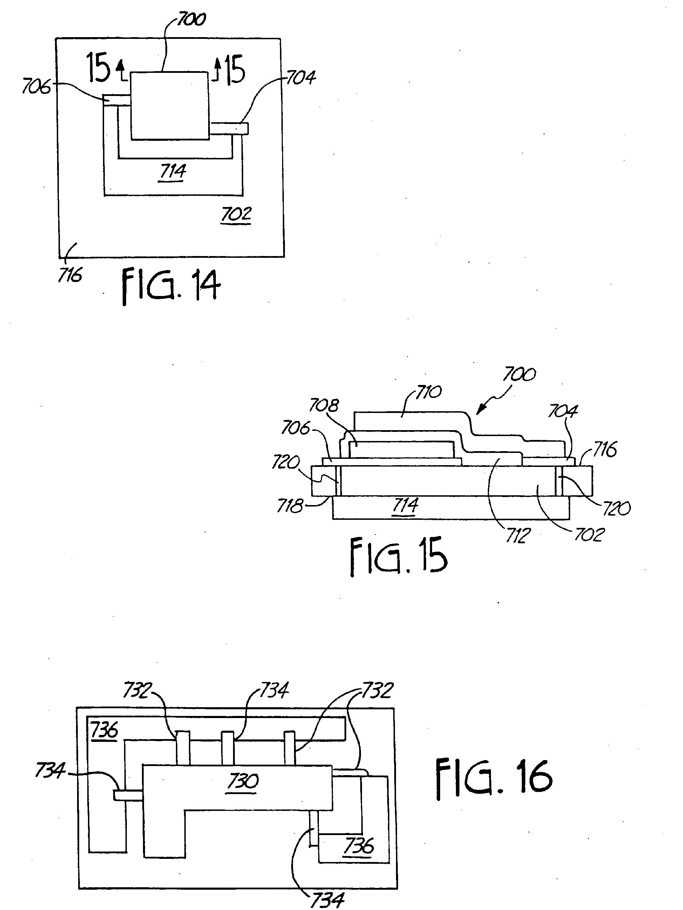

An integrated thin battery structure has the general features shown in Figs. 14 and 15. Referring to Figs. 14 and 15, integrated battery 700 is located on substrate 702. Battery 700 includes positive current 704 and negative current collector 706 that extend over the surface of substrate 702. Positive current collector 704 is in contact with positive electrode 708, and negative current collector 706 is in contact with negative electrode 710. Separator 712 separates positive electrode 708 from negative electrode 710. The thin layer structure of integrated battery 700 can be formed by the approaches described above.

The integrated battery structures can be used as direct or backup power supplies for integrated microelectronics. The other microelectronic components 714 can be placed on the top surface 716 of substrate 702 and/or on the bottom surface 718 of substrate 702 in which the microelectronic components are connected with battery 700 by way of electrical contacts 720 extending through substrate 702.

Due to the high surface area of the nanoparticulate electroactive particles and the high surface area of the electrodes relative to their mass, the thin battery structures have extremely high current densities. To take advantage of the high current densities and to reduce further any resistance within the circuit and battery, a plurality of contacts can be made between the circuit(s) and the battery structure. Such a structure with multiple contacts is shown in Fig. 16. Integrated battery 730 includes a plurality of connections 732 of the positive collector and connections 734 of the negative current collector. Current collector connections 732, 734 can connect with one or more distinct integrated circuits 736.

### EXAMPLES

### Example 1 - Construction of Smooth Electrodes with Electroactive Nanoparticles

This example demonstrates the production of very smooth battery electrodes produced with electroactive nanoparticles.

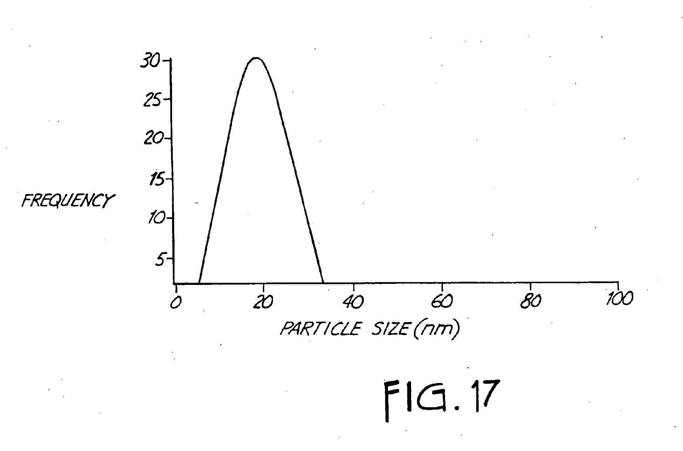

Lithium manganese oxide nanoparticles were produced using laser pyrolysis and subsequent heat treatment, essentially following the procedures described in copending and commonly assigned U.S. Patent Application Serial No. 09/334,203 to Kumar et al., entitled "Reaction Methods for Producing Ternary Particles," incorporated herein by reference. The lithium manganese oxide nanoparticles had an average diameter of about 25 nm and a narrow particle size distribution. The particle size distribution of the lithium manganese oxide nanoparticles is plotted in Fig. 17. The lithium manganese oxide nanoparticles are suitable materials for the formation of secondary batteries.

The lithium manganese oxide nanoparticles were combined with graphite powder (Chuetsu Graphite Works, CO., Osaka, Japan) with an average particle size of about 2 microns and acetylene black powder (Chevron Corp.) with an average particle size of about 41 nm, as conductive diluents. The dry powders were blended using a mortar and pestle with a 12% by weight dispersion of poly(vinydene fluoride) (PVdF) in n-methyl pyrrolidinone solvent. The PVdF serves as a binder. The solids in the resultant formulation was 60% by weight lithium manganese oxide, 30% by weight carbon ( about equal amounts of graphite and carbon black) and 10% by weight PVdF. Disc with higher concentrations of lithium manganese oxide have been obtained. The dispersion was mixed well and coated at a thickness of 200 microns onto a stainless steel foil.

An approximately two-square centimeter disk was cut from the coated foil sheet, dried and pressed at 5,000 pounds over the two square centimeters to densify the coating. The compressed disk was vacuum dried and weighed. After drying, the disc had a thickness of about 30 microns. The procedure was repeated using commercially available lithium manganese oxide having larger standard particle sizes. After weighing the vacuum dried pellet, the sample was analyzed by scanning electron microscopy and atomic force microscopy.

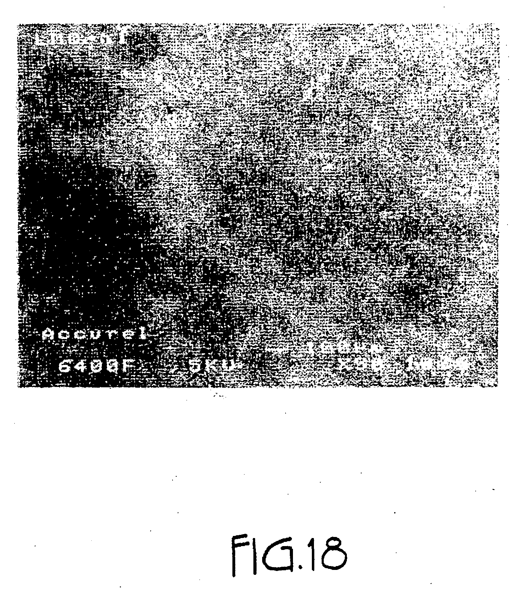

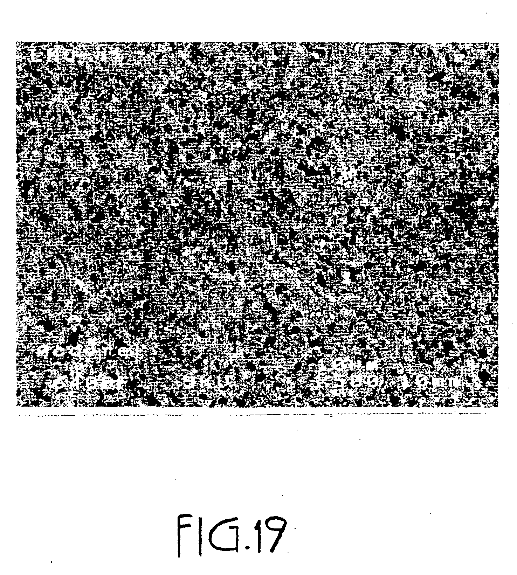

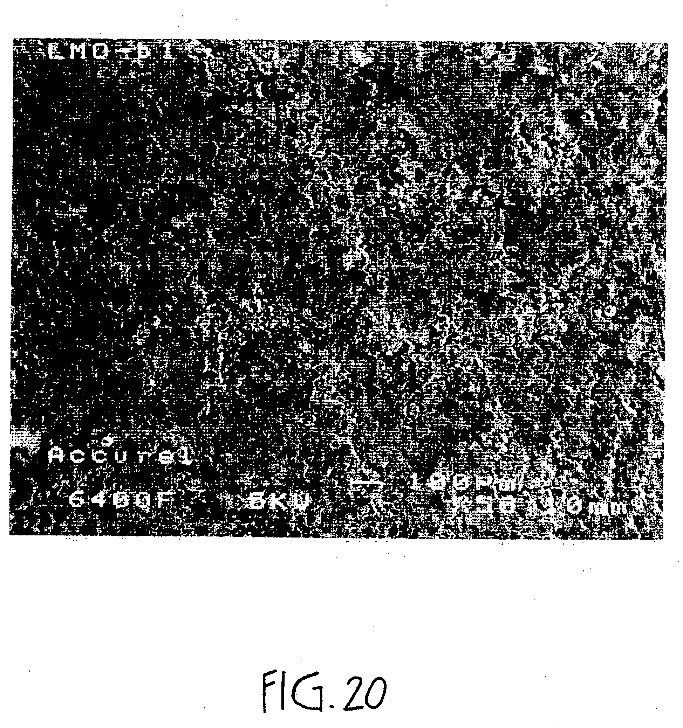

The scanning electron micrograph of the electrode produced with the lithium manganese oxide nanoparticles is shown in Fig. 18. The same view of the material is magnified a factor of 100 in Fig. 19. For comparison, the scanning electron micrograph of the electrode produced with the commercial lithium manganese oxide powders is shown in Fig. 20. The surface in Fig. 20 is visibly much rougher than the surface in Fig. 18.

The embodiments described above are intended to be illustrative and not limiting. Additional embodiments are within the claims below. Although the present invention has been described with reference to preferred embodiments, workers skilled in the art will recognize that changes may be made in form and detail without departing from the scope of the invention.

## Claims

1. An electrode comprising a collection of particles having an average diameter less than 500 nm and a polymer binder, the electrode having a root mean square surface roughness less than 1 µm, and the electrode having an average thickness less than 5 µm, wherein the collection of particles comprises electroactive particles.

2. The electrode of claim 1 wherein the collection of particles further comprises electrically conductive particles.

3. The electrode of any preceding claim wherein fewer than 1 particle in 10⁶ has a diameter greater than four times the average diameter of the collection of particles.

4. The electrode of any preceding claim wherein the collection of particles have a distribution of particle sizes such that at least 95 percent of the particles have a diameter greater than 40 percent of the average diameter and less than 160 percent of the average diameter.

5. The electrode of any preceding claim further comprising a current collector.

6. The electrode of claim 5 wherein the current collector comprises aluminium metal, copper metal, stainless steel metal or graphite paper.

7. The electrode of any preceding claim having an average thickness less than 1 µm.

8. The electrode of any preceding claim wherein the electroactive particles comprise a lithium intercalation compound.

9. The electrode of claim 8 wherein the lithium intercalation compound comprises a composition selected from vanadium oxide, tin oxide, titanium oxide, silver vanadium oxide, manganese oxide, lithium manganese oxide, lithium titanium oxide, lithium cobalt oxide, lithium nickel oxide, iron sulphides, molybdenum sulphide and mixtures, composites and derivatives thereof.

10. A battery comprising:
an electrode of any of the preceding claims as a positive electrode;
a negative electrode; and
a separator between the positive electrode and the negative electrode.

11. The battery of claim 10 wherein the negative electrode is an electrode according to any one of claims 1 to 8.

## Patentansprüche

1. Elektrode, die eine Sammlung von Partikeln mit einem durchschnittlichen Durchmesser von weniger als 500 nm und einem Polymerbindemittel umfasst, wobei die Elektrode eine RMS-(root means square)-Oberflächenrauheit von weniger als 1 µm hat und wobei die Elektrode eine durchschnittliche Dicke von weniger als 5 µm hat, wobei die Sammlung von Partikeln elektroaktive Partikel umfasst.

2. Elektrode nach Anspruch 1, wobei die Sammlung von Partikeln ferner elektrisch leitende Partikel umfasst.

3. Elektrode nach einem der vorherigen Ansprüche, wobei weniger als einer von 10⁶ Partikeln einen Durchmesser von mehr als dem Vierfachen des durchschnittlichen Durchmessers der Sammlung von Partikeln hat.

4. Elektrode nach einem der vorherigen Ansprüche, wobei die Sammlung von Partikeln eine solche Partikelgrößenverteilung hat, dass wenigstens 95 Prozent der Partikel einen Durchmesser von mehr als 40 Prozent des durchschnittlichen Durchmessers und weniger als 160 Prozent des durchschnittlichen Durchmessers haben.

5. Elektrode nach einem der vorherigen Ansprüche, die ferner einen Stromkollektor umfasst.

6. Elektrode nach Anspruch 5, wobei der Stromkollektor Aluminiummetall, Kupfermetall, Edelstahlmetall oder Graphitpapier umfasst.

7. Elektrode nach einem der vorherigen Ansprüche mit einer durchschnittlichen Dicke von weniger als 1 µm.

8. Elektrode nach einem der vorherigen Ansprüche, wobei die elektroaktiven Partikel eine Lithiumeinlagerungsverbindung umfassen.

9. Elektrode nach Anspruch 8, wobei die Lithiumeinlagerungsverbindung eine Zusammensetzung umfasst, die ausgewählt ist aus Vanadiumoxid, Zinnoxid, Titanoxid, Silbervanadiumoxid, Manganoxid, Lithiummanganoxid, Lithiumtitanoxid, Lithiumkobaltoxid, Lithiumnickeloxid, Eisensulfiden, Molybdänsulphid und Gemischen, Kompositen und Derivaten davon.

10. Batterie, die Folgendes umfasst:
eine Elektrode nach einem der vorherigen Ansprüche als positive Elektrode;
eine negative Elektrode; und
einen Separator zwichen der positiven Elektrode und der negativen Elektrode.

11. Batterie nach Anspruch 10, wobei die negative Elektrode eine Elektrode nach einem der Ansprüche 1 bis 8 ist.

## Revendications

1. Electrode comprenant une collection de particules ayant un diamètre moyen de moins de 500 nm et un liant polymère, l'électrode ayant une rugosité de surface moyenne quadratique de moins de 1µm, et l'électrode ayant une épaisseur moyenne de moins de 5 µm, la collection de particules comprenant des particules électroactives.

2. Electrode selon la revendication 1, dans laquelle la collection de particules comprend en outre des particules électriquement conductrices.

3. Electrode selon l'une quelconque des revendications précédentes, dans laquelle moins d'1 particule sur 10⁶ a un diamètre supérieur à quatre fois le diamètre moyen de la collection de particules.

4. Electrode selon l'une quelconque des revendications précédentes, dans laquelle la collection de particules a une distribution de grosseurs de particules telle qu'au moins 95 pour cent des particules ont un diamètre supérieur à environ 40 pour cent du diamètre moyen et inférieur à environ 160 pour cent du diamètre moyen.

5. Electrode selon l'une quelconque des revendications précédentes, comprenant en outre un collecteur de courant.

6. Electrode selon la revendications 5, dans laquelle le collecteur de courant comprend un métal d'aluminium, un métal de cuivre, un métal d'acier inoxydable ou un papier graphité.

7. Electrode selon l'une quelconque des revendications précédentes, ayant une épaisseur moyenne de moins de 1µm.

8. Electrode selon l'une quelconque des revendications précédentes, dans laquelle les particules électroactives comprennent un composé d'intercalation de lithium.

9. Electrode selon la revendication 8, dans laquelle le composé d'intercalation de lithium comprend une composition sélectionnée parmi l'oxyde de vanadium, l'oxyde d'étain, l'oxyde de titane, l'oxyde d'argent et de vanadium, l'oxyde de manganèse, l'oxyde de manganèse et de lithium, l'oxyde de titane et de lithium, l'oxyde de cobalt et de lithium, l'oxyde de nickel et de lithium, les sulfures de fer, le sulfure de molybdène et des mélanges, composites et dérivés de ceux-ci.

10. Batterie comprenant:
une électrode selon l'une quelconque des revendications précédentes comme électrode positive ;
une électrode négative ; et
un séparateur entre l'électrode positive et l'électrode négative.

11. Batterie selon la revendication 10, dans laquelle l'électrode négative est une électrode selon l'une quelconque des revendications 1 à 8.
